# EUROPÄISCHE PATENTSCHRIFT

(11) **EP 2 815 652 B1**
(45) Veröffentlichungstag und Bekanntmachung des Hinweises auf die Patenterteilung: **22.02.2017**
(21) Anmeldenummer: 14173347.7
(22) Anmeldetag: 20.06.2014
(51) Int. Cl.: A01N 63/02, A01N 37/46, A01P 1/00

(54) **Verfahren zur Dekontamination von bakteriologischen Verunreinigungen**
Method for the decontamination of bacteriological impurities
Procédé de décontamination d'impuretés bactériologiques

(30) Priorität: 20.06.2013 DE 102013106455
(43) Veröffentlichungstag der Anmeldung: 24.12.2014
(73) Patentinhaber: Airbus Defence and Space GmbH, 85521 Ottobrunn (DE); Airbus DS GmbH, 82024 Taufkirchen (DE)
(72) Erfinder: Reidt, Ulrich, 34613 Schwalmstadt (DE); Fetter, Viktor, 73441 Bopfingen (DE); Hummel, Thomas, 88682 Salem (DE); Friedberger, Alois, 85667 Oberpframmern (DE)
(74) Vertreter: Kastel, Stefan

(56) Entgegenhaltungen:
- EP-A2- 1 421 855
- WO-A1-2004/062677
- WO-A2-2010/011960
- WO-A2-2013/074959
- US-A1- 2003 180 319
- US-A1- 2004 063 189
- BERMUDEZ O ET AL: "Decontamination of surfaces by lysozyme encapsulated in reverse micelles", JOURNAL OF CHROMATOGRAPHY B: BIOMEDICAL SCIENCES & APPLICATIONS, ELSEVIER, AMSTERDAM, NL, Bd. 807, Nr. 1, 25. Juli 2004 (2004-07-25) , Seiten 95-103, XP004512109, ISSN: 1570-0232, DOI: 10.1016/J.JCHROMB.2004.02.010
- Elzbieta Walencka ET AL: "Lysostaphin as a potential therapeutic agent for staphylococcal biofilm eradication", Polish Journal of Microbiology, 1. Januar 2005 (2005-01-01), Seiten 191-200, XP055141798, Poland Gefunden im Internet: URL:http://www.ncbi.nlm.nih.gov/pubmed/164 50834 [gefunden am 2014-09-22]
- J. A. WU ET AL: "Lysostaphin Disrupts Staphylococcus aureus and Staphylococcus epidermidis Biofilms on Artificial Surfaces", ANTIMICROBIAL AGENTS AND CHEMOTHERAPY, Bd. 47, Nr. 11, 23. Oktober 2003 (2003-10-23), Seiten 3407-3414, XP055141799, ISSN: 0066-4804, DOI: 10.1128/AAC.47.11.3407-3414.2003
- Manan Sharma ET AL: "Section III Biological Decontamination Strategies: Chapter 16 Bacteriophages", Decontamination of Fresh and Minimally Processed Produce, 16. Februar 2012 (2012-02-16), Seiten 284-295, XP055141837, Gefunden im Internet: URL:http://onlinelibrary.wiley.com/store/1 0.1002/9781118229187.ch16/asset/ch16.pdf?v =1&t=i0dsvada&s=3c341b4bfb58776d6655604d64 5126e89540d202 [gefunden am 2014-09-22]
- MARINE HENRY ET AL: "Tools from viruses: Bacteriophage successes and beyond", VIROLOGY, Bd. 434, Nr. 2, 1. Dezember 2012 (2012-12-01), Seiten 151-161, XP055141857, ISSN: 0042-6822, DOI: 10.1016/j.virol.2012.09.017
- Jitendra Patel ET AL: "Inactivation of Escherichia coli O157:H7 attached to spinach harvester blade using bacteriophage", Foodborne pathogens and disease, 1. April 2011 (2011-04-01), Seiten 541-546, XP055142247, United States DOI: 10.1089/fpd.2010.0734 Gefunden im Internet: URL:http://www.ncbi.nlm.nih.gov/pubmed/214 53119
- Les Baillie: "Environmentally friendly decontamination of Bacillus anthracis spores", Microbiologist, 1. September 2008 (2008-09-01), Seiten 47-48, XP055141902, Bedford, U.K. Gefunden im Internet: URL:http://issuu.com/societyforappliedmicr obiology/docs/sept08micro/48 [gefunden am 2014-09-22]
- LORENA RODRÍGUEZ-RUBIO ET AL: "The Phage Lytic Proteins from the Staphylococcus aureus Bacteriophage vB_SauS-phiIPLA88 Display Multiple Active Catalytic Domains and Do Not Trigger Staphylococcal Resistance", PLOS ONE, Bd. 8, Nr. 5, 28. Mai 2013 (2013-05-28), Seite e64671, XP055158006, DOI: 10.1371/journal.pone.0064671
- D M DONOVAN ET AL: "Peptidoglycan hydrolase enzyme fusions for treating multi-drug resistant pathogens", BIOTECH INT, Bd. 21, 1. April 2009 (2009-04-01), Seiten 6-10, XP055158011,
- DONOVAN DAVID M ET AL: "Peptidoglycan hydrolase fusions maintain their parental specificities", APPLIED AND ENVIRONMENTAL MICROBIOLOGY, AMERICAN SOCIETY FOR MICROBIOLOGY, US, Bd. 72, Nr. 4, 1. April 2006 (2006-04-01), Seiten 2988-2996, XP002477599, ISSN: 0099-2240, DOI: 10.1128/AEM.72.4.2988-2996.2006
- KENNETH JAMES BUCKLEY,MASAKI HAYASHI: "Lytic activity localized to membrane-spanning region of phiX174 E protein", MOL GEN GENET, Bd. 204, 1986, Seiten 120-125, XP001525910,

### Sequenzprotokoll

<110> EADS Deutschland GmbH; Astrium GmbH
<120> VERFAHREN ZUR DEKONTAMINATION VON BAKTERIOLOGISCHEN VERUNREINIGUNGEN
<160> 1
<210> SEQ ID NO 1
   <211> 477
   <212> DNA
   <213> Enterobacteria Phage HK97
<400>
   atggtggaaa tcaataatca acgtaaggcg ttcctcgata tgctggcgtg gtcagaggga 60
   actgataacg gacggcagaa aaccagaaat catggttatg acgtcattgt aggcggagag 120
   ctattcactg attactccga tcaccctcgc aaacttgtca cgctaaaccc caaactcaaa 180
   tcaacagccg ccggacgcta ccagcttctt tcccgttggt gggatgccta ccgcaagcag 240
   cttggcctga aagacttctc tcccaaaagc caggacgctg tggcactgca gcagattaag 300
   gagcgtggcg ctttaccgat gattgatcgc ggtgatatcc gtcaggcaat cgaccgttgc 360
   agcaatatct gggcttcgtt gccgggggct ggttatggcc agttcgagca taaggctgac 420
   agcctgattg caaaattcaa agaagcaggc ggaacggtca gagagattga ggtatga 477

## Beschreibung

Die Erfindung betrifft Verfahren zur Dekontamination von bakteriologischen Verunreinigungen.

Desinfektions- bzw. Dekontaminationsmaßnahmen gegen bakteriologische Verunreinigungen durch chemische oder physikalische Verfahren sind entscheidend bei der Bekämpfung von Infektionskrankheiten. Häufig sind diese Verfahren extrem toxisch und können selten in geschlossen Räumlichkeiten (Internationale Raumstation, U-Boote, usw.) angewendet werden. Auch die Entstehung multiresistenter Keime ist zunehmend ein Problem in Krankenhäusern und kann nur unzureichend durch die Verwendung von herkömmlichen Desinfektionsmitteln beseitigt werden. Für den Menschen ungefährliche Desinfektionsmittel, die aber auf der anderen Seite hoch bakterizid wirken, sind jedoch selten verfügbar.

Bakteriologische Verunreinigungen werden in der Regel durch die Verwendung eines geeigneten Desinfektionsmittels beseitigt. Häufig sind diese Desinfektionsmittel gesundheitsgefährdend und können speziell in geschlossenen Habitaten, d.h. Lebensräumen, nur eingeschränkt verwendet werden. Auch in schlecht zugänglichen Bereichen ist eine Verwendung klassischer Desinfektionsmittel nur schwer möglich. Auf Grund ihres bakteriziden Wirkungsmechanismus sind präventive wachstumshemmende Maßnahmen nicht möglich. Häufig sind klassische Desinfektionsmittel eine wässrige Lösung, die so gut wie gar nicht bei hoch sensitiven elektrischen Geräten eingesetzt werden kann.

Zum technologischen Hintergrund wird auf folgende Literaturstellen verwiesen:
1) Bacteriophage for biocontrol of foodborne pathogens: calculations and considerations.; Hagens S, Loessner MJ.; Curr Pharm Biotechnol. 2010 Jan;11(1):58-68.
2) Biocontrol of Foodborne Bacteria: Past, Present and Future Strategies.; Mclntyre, L. Hudson, J. A. Billington, C. Withers, H.; 2007, VOL 7; NUMB 5, pages 25-36
3) Use of Bacteriophages as novel food additives.; Kathy Walker; October 29, 2006; FS06 ANR 490/811
4) Virulent bacteriophage for efficient biocontrol of Listeria monocytogenes in ready-to-eat foods.; Guenther S, Huwyler D, Richard S, Loessner MJ.; Appl Environ Microbiol. 2009 Jan;75(1):93-100. Epub 2008 Nov 14.
5) Preventing biofilms of clinically relevant organisms using bacteriophage.; Donlan RM. Trends Microbiol. 2009 Feb;17(2):66-72. Epub 2009 Jan 21.
6) The use of phages for the removal of infectious biofilms.; Azeredo J, Sutherland IW.; Curr Pharm Biotechnol. 2008 Aug;9(4):261-6.
7) Dispersing biofilms with engineered enzymatic bacteriophage.; Lu TK, Collins JJ.; Proc Natl Acad Sci USA. 2007 Jul 3;104(27):11197-202. Epub 2007 Jun 25.
8) Bacteriophages as therapeutic agents.; Sulakvelidze A, Morris JG Jr; Ann Med. 2001 Nov;33(8):507-9.
9) Bacteriophage therapy.; Sulakvelidze A, Alavidze Z, Morris JG Jr.; Antimicrob Agents Chemother. 2001 Mar;45(3):649-59.
10) Phage therapy pharmacology.; Abedon ST, Thomas-Abedon C.; Curr Pharm Biotechnol. 2010 Jan;11(1):28-47.
11) Phage Therapy - Everything Old is New Again; Kropinski AM.; Can J Infect Dis Med Microbiol. 2006 Sep;17(5):297-306.
12) What can bacteriophages do for us?; P. Veiga-Crespo1, J. Barros-Veläzquez, and T.G. Villa; FORMATEX 2007
13) Production and application of bacteriophage and bacteriophage-encoded lysins.; Courchesne NM, Parisien A, Lan CQ.; Recent Pat Biotechnol. 2009;3(1):37-45.
14) Phage Therapy - Everything Old is New Again; Kropinski AM.; Can J Infect Dis Med Microbiol. 2006 Sep;17(5):297-306.
15) Human volunteers receiving Escherichia coli phage T4 orally: a safety test of phage therapy.; Bruttin A, Brüssow H.; Antimicrob Agents Chemother. 2005 Jul; 49(7):2874-8.
16) Phage therapy: the Escherichia coli experience. Brüssow H. Microbiology. 2005 Jul;151(Pt 7):2133-40.
17) Safety by Nature: Potential Bacteriophage Applications, Bacteriophages offer opportunities for safely managing bacterial infections; Alexander Sulakvelidze; Microbe Magazine 03-2011
18) T4 phages against Escherichia coli diarrhea: potential and problems.; Denou E, Bruttin A, Barretto C, Ngom-Bru C, Brüssow H, Zuber S.; Virology. 2009 May 25;388(1):21-30. Epub 2009 Apr 1
19) Phage Therapy - Everything Old is New Again; Kropinski AM.; Can J Infect Dis Med Microbiol. 2006 Sep;17(5):297-306
20) Impact of phages on two-species bacterial communities.; Harcombe WR, Bull JJ.; Appl Environ Microbiol. 2005 Sep;71(9):5254-9.
21) The control of experimental Escherichia coli diarrhoea in calves by means of bacteriophages.; Smith HW, Huggins MB, Shaw KM.; J Gen Microbiol. 1987 May;133(5):1111-26.
22) Phage-mediated intergeneric transfer of toxin genes.; Chen J, Novick RP.; Science. 2009 Jan 2;323(5910):139-41.
23) Phage-mediated Shiga toxin 2 gene transfer in food and water.; Imamovic L, Jofre J, Schmidt H, Serra-Moreno R, Muniesa M.; Appl Environ Microbiol. 2009 Mar;75(6):1764-8. Epub 2009 Jan 23.
24) Evolution of foodborne pathogens via temperate bacteriophage-mediated gene transfer.; Brabban AD, Hite E, Callaway TR.; Foodborne Pathog Dis. 2005 Winter;2(4):287-303.
25) Potential to use ultraviolet-treated bacteriophages to control foodborne pathogens.; Hudson JA, Bigwood T, Premaratne A, Billington C, Horn B, Mclntyre L.; Foodborne Pathog Dis. 2010 Jun;7(6):687-93.
26) Model system using coliphage phi X174 for testing virus removal by air filters.; Rapp ML, Thiel T, Arrowsmith RJ.; Appl Environ Microbiol. 1992 Mar;58(3):900-4.
27) Evaluation of filters for removal of bacteriophages from air.; Washam CJ, Black CH, Sandine WE, Elliker PR.; Appl Microbiol. 1966 Jul;14(4):497-505.
28) Evaluation of a commercial air filter for removal of viruses from the air.; Roelants P, Boon B, Lhoest W.; Appl Microbiol. 1968 Oct;16(10):1465-7.
29) Air filtration of submicron virus aerosols.; Harstad JB, Decker HM, Buchanan LM, Filler ME.; Am J Public Health Nations Health. 1967 Dec;57(12):2186-93.
30) Phage therapy: the Escherichia coli experience. Brüssow H. Microbiology. 2005 Jul;151(Pt 7):2133-40.
31) Long-Term Bacteriophage Preservation; Hans-W. Ackermann, Denise Tremblay, and Sylvain Moineau
32) A reliable method for storage of tailed phages.; Golec P, Dabrowski K, Hejnowicz MS, Gozdek A, Loś JM, Wegrzyn G, Lobocka MB, Loś M.; J Microbiol Methods. 2011 Mar;84(3):486-9. Epub 2011 Jan 21.
33) Prevention of Escherichia coli infection in broiler chickens with a bacteriophage aerosol spray.; HuffWE, Huff GR, Rath NC, Balog JM, Donoghue AM.; Poult Sci. 2002 Oct;81(10):1486-91.
34) Viability and electron microscope studies of phages T3 and T7 subjected to freeze-drying, freeze-thawing and aerosolization.; Cox CS, Harris WJ, Lee J.; J Gen Microbiol. 1974 Mar;81(1):207-15..
35) Influence of relative humidity on the survival of some airborne viruses.; Songer JR.; Appl Microbiol. 1967 Jan;15(1):35-42.
36) Mass airflow cabinet for control of airborne infection of laboratory rodents.; McGarrity GJ, Coriell LL.; Appl Microbiol. 1973 Aug;26(2):167-72.
37) Survival of T3 coliphage in varied extracellular environments. I. Viability of the coliphage during storage and in aerosols.; Warren JC, Hatch MT.; Appl Microbiol. 1969 Feb;17(2):256-61.
38) In vitro lung delivery of bacteriophages KS4-M and ΦKZ using dry powder inhalers for treatment of Burkholderia cepacia complex and Pseudomonas aeruginosa infections in cystic fibrosis.; Golshahi L, Lynch KH, Dennis JJ, Finlay WH.; J Appl Microbiol. 2011 Jan;110(1):106-17. doi: 10.1111/j.1365-2672.2010.04863.x. Epub 2010 Sep 28.
39) A freeze-dried formulation of bacteriophage encapsulated in biodegradable microspheres.; Puapermpoonsiri U, Spencer J, van der Walle CF.; Eur J Pharm Biopharm. 2009 May;72(1):26-33. Epub 2008 Dec 13.
40) Influence of relative humidity on the survival of some airborne viruses.; Songer JR.; Appl Microbiol. 1967 Jan;15(1):35-42.
41) Survival of T3 coliphage in varied extracellular environments. I. Viability of the coliphage during storage and in aerosols.; Warren JC, Hatch MT.; Appl Microbiol. 1969 Feb;17(2):256-61.

Weitere Literaturstellen zum technologischen Hintergrund sind:
US 2010254950, CA 2740010, WO 2010123200, US 2011020290, WO 2009016418, WO 2011028057, US 2011182863, WO 2010050833, US 2009155215, US 2009232770, US 2006140911, WO 2006063176, US 2010254950, US 2010120673, US 2002058027, US 2003082110, JP 2010187661, US 2009104157, US 20020058027, WO 2007024628, EP1908449, WO 2004058088, WO 2008001342, WO2005089527, US 20070025978, WO 03103578, US 20050153415.
Bermudez et al., Journal of Chromatography B:Biomedical Sciences & Applications, 807 (2004), 95, Walencka et al., Polish Journal of Microbiology, (2005), 191 und Wu et al., Antimicrobial Agents and Chemotherapy, 47 (2003), 3407 beschreiben jeweils Dekontaminationsverfahren, bei denen Lysoszym bzw. Lysostaphin als Dekontaminationsmittel verwendet werden.

In Sharma et al., Decontamination of Fresh and Minimally Processed Produce, Section III (2012), 284, Henry et al., Virology, 434 (2012), 151, Patel et al., Foodborne pathogens and Disease, (2011), 541, Baillie, Microbiologist (2008), 47, WO 2004/062677 A1, US 2004/063189 A1, EP 1 421 855 A2 und US 2003/180319 A1 sind Dekontaminationsverfahren beschrieben, in denen Bakteriophagen als Dekontaminationsmittel verwendet werden.

Aufgabe der Erfindung ist es, ein alternatives nicht-therapeutisches Verfahren zur Dekontamination von bakteriologischen Verunreinigungen vorzuschlagen, das die oben genannten Nachteile überwindet.

Diese Aufgabe wird mit einem Verfahren mit den Merkmalen des Anspruchs 1 gelöst.

Vorteilhafte Ausgestaltungen der Erfindung sind Gegenstand der Unteransprüche. Ein Verfahren zur Dekontamination von bakteriologischen Verunreinigungen weist die folgenden Schritte auf:
a) Herstellen eines Dekontaminationsmittels auf Basis von bakteriolytischen Proteinen, wobei Bakteriophagen bereitgestellt werden;
b) Verteilen des Dekontaminationsmittels in einem zu dekontaminierenden Habitat.

Besonders bevorzugt werden in Schritt a) zusätzlich Fusionsproteine auf Basis von Bakteriophagenproteinen und/oder bakteriolytische Proteine, insbesondere Lysozym, Lysostaphin, lytM, Proteasen und/oder Hydrolasen, bereitgestellt, um vorteilhaft damit das Dekontaminationsmittel herzustellen

Durch Verwendung von geeigneten Bakteriophagen bzw. Bakteriophagenproteinen bzw. Fusionsproteinen auf Basis von Bakteriophagenproteinen ist eine gezielte Desinfektion bzw. Dekontamination von bakteriologischen Verunreinigungen möglich. Bakteriophagen sind die natürlichen Feinde der Bakterien und mit ihnen wäre eine Art mikrobiologische Schädlingsbekämpfung möglich. Auch könnten Bakteriophagen als Präventivmaßnahme einer unkontrollierten Vermehrung bestimmter Bakterien entgegenwirken. Zusammenfassend werden Bakteriophagen bestimmter Bakterien entgegenwirken. Zusammenfassend werden Bakteriophagen vorteilhaft als ein effektives, hochwirksames und biologisches Desinfektions- bzw. Dekontaminationsmittel eingesetzt.

Folgende Vorteile können dadurch erzielt werden:
1) Effektive und nicht toxische Desinfektion;
2) Präventive Desinfektion;
3) Desinfektion an unzugänglichen Stellen;
4) Ausbringen im trockenen und feuchten Zustand;
5) keine Beschädigung von empfindlichen Geräten (Elektrogeräte);
6) gezieltes Abtöten eines bestimmten Bakterienstamms, ohne die gesamte Bakterienflora zu vernichten;
7) Medizinische Anwendung im Bereich der Bakteriophagentherapie bei Sepsis, schlecht heilenden Wunden, als Antibiotikaersatz, zur Anwendung gegen multiresistente Keime (MRSA), bei Nasennebenhöhlenentzündungen und Augenentzündungen usw.
8) in der Landwirtschaft zur Bekämpfung bakteriologischer Tier- und Pflanzenerkrankungen;
9) bei der Lebensmittelproduktion zur nicht toxischen Dekontaminierung.

Die Bakteriophagen werden in Schritt a) mittels Gen-Knockout durch spezifische Mutation genetisch derart modifiziert, dass Transduktionsgene zum Transferieren bakterieller Virulenzfaktorgenen in das Bakteriophagen inaktiviert werden.

Besonders bevorzugt erfolgt der Gen-Knockout durch Punktmutation, Deletion, Insertion, Inversion und/oder Rasterschubmutation.

Vorteilhaft werden die Bakteriophagen stabilisiert, insbesondere gegen Denaturierung durch Temperaturschwankungen und/oder Scherkräfte.

Vorzugsweise wird dabei als Stabilisierungsmethode eine oder mehrere Stabilisierungsmethoden aus der Gruppe
- Vakuumtrocknung;
- Gefriertrocknung;
- Lyophilisation;
- Sublimationstrocknung;
- Zugabe von Stabilisatoren, insbesondere von Sacchariden, Sucrosen, Glycerolen, Polyolen, Polyethylenglycolen, Aminosäuren, Methylaminen und/oder anorganischen Salzen;
- Glykosilierung;
- PEGylierung, insbesondere unvollständiges Umhüllen des Bakteriophagen mit Polyethylenglycolmolekülen unter freiem Verbleiben der kontraktilen Scheide des Bakteriophagen
ausgewählt.

Besonders bevorzugt wird das Fusionsprotein in Schritt a) mit den folgenden Schritten hergestellt:
a1) Klonieren eines Fusionsproteingens;
a2) Transformieren des Fusionsproteingens in einen niederen prokaryotischen oder eukaryotischen Organismus;
a3) Exprimieren von Fusionsproteinen in dem Organismus;
a4) Reinigen der Fusionsproteine,
wobei in Schritt a1) ein Bakteriophagenprotein-Gen, ein Linkerprotein-Gen und ein lytisches Protein-Gen ligiert werden.

Vorteilhaft wird dabei in Schritt a1) die Ligation seriell durchgeführt.

Vorzugsweise wird dabei zuerst das Bakteriophagenprotein-Gen, insbesondere N-terminal, und dann das lytische Protein-Gen, insbesondere C-terminal, mit dem Linkerprotein-Gen ligiert.

Bevorzugt werden für die Ligation unterschiedliche Restriktionsenzyme für das Bakteriophagenprotein-Gen und das lytische Protein-Gen verwendet, insbesondere BsmBI als 5'-Ende und Acc65l als 3'-Ende für das Bakteriophagenprotein-Gen und Sall als 5'-Ende und Notl als 3'-Ende für das lytische Protein-Gen.

Vorteilhaft wird ein Linkerprotein erzeugt, das eine freie dreidimensionale Bewegung des Bakteriophagenproteins und des lytischen Proteins zueinander ermöglicht.

Besonders bevorzugt hat das Linkerprotein eine Länge von neun Codons und ist vorteilhaft frei von Stopcodons.

Bevorzugt wird das Fusionsprotein stabilisiert, insbesondere gegen Denaturierungen, hervorgerufen durch physikalische Einflüsse wie Temperaturschwankungen, Scherkräfte und Drücke, und/oder durch biologische Einflüsse wie Proteasen und/oder durch chemische Einflüsse.

Vorzugsweise wird dabei als Stabilisierungsmethode eine oder mehrere Stabilisierungsmethoden aus der Gruppe
- Vakuumtrocknung;
- Gefriertrocknung;
- Lyophilisation;
- Sublimationstrocknung;
- Zugabe von Stabilisatoren, insbesondere von Sacchariden, Sucrosen, Glycerolen, Polyolen, Polyethylenglycolen, Aminosäuren, Methylaminen und/oder anorganischen Salzen;
- Glykosilierung;
- PEGylierung
ausgewählt.

Besonders bevorzugt werden in Schritt a) unterschiedliche Bakteriophagenstämme bereitgestellt.

Alternativ oder zusätzlich kann eine Mischung aus Bakteriophagen und bakteriolytischen Proteinen, insbesondere Fusionsproteinen, bereitgestellt werden.

Weiter zusätzlich können Bakteriophagen nicht inhibitierende Antibiotika und/oder Bakteriophagen nicht inhibitierende klassische Desinfektionsmittel bereitgestellt werden.

Vorteilhaft wird in Schritt b) das Dekontaminationsmittel unter Verwendung wenigstens einer der folgenden Methoden verteilt:
- Verneblung mit einer Verneblungsdüse;
- Versprühung durch Drucksprühgeräte und/oder Pumpsprühgeräte;
- Ausbringung als trockenes Pulver nach Lyophilisieren;
- Zerstäuben von pulverisierten Bakteriophagen;
- Ausbringung nach Binden der Bakteriophagen an Trägermaterialien, insbesondere Pulvermaterialien und/oder feuchte Tücher;
- Ausbringung nach Zugabe von Flüssigkeiten;
- Ausbringung durch Bepinseln;
- Ausbringung nach Auftrag auf Textilien und/oder Einbringung in Tinkturen, Salben, Lotionen, Gele, Spülungen, Pulver, Pflaster, Verbände, Löstabletten, Lutschtabletten, Zäpfchen, Mundwasser und/oder Zahncreme.

Vorzugsweise wird vor Schritt b) ein Identifikationsschritt zur spezifischen Identifizierung der Kontaminationsspezies in dem Habitat und ein Auswahlschritt zum Auswählen des für die identifizierte Kontaminationsspezies geeigneten Dekontaminationsmittels durchgeführt.

Besonders bevorzugt werden nach Schritt b) die Bakteriophagen aus dem Habitat entfernt.

Dabei wird vorteilhaft wenigstens ein Filter, insbesondere wenigstens ein HEPA-Filter (high efficiency particulate airfilter) verwendet.

In bevorzugter Ausgestaltung wird das Dekontaminationsmittel vor einer Kontamination des Habitats in dem Habitat verteilt.

Ein Ausführungsbeispiel der Erfindung wird nachfolgend anhand der beigefügten Zeichnungen näher erläutert. Darin zeigt:
- Fig. 1: ein Bakteriophagen, das ein Bakterium infiziert;
- Fig. 2: filamentöse Bakteriophagen;
- Fig. 3: den Bakteriophagen T4;
- Fig. 4: den lytischen Zyklus bei der Infektion eines Bakteriums mit einem Bakteriophagen;
- Fig. 5: den Angriff von Bakteriophagen auf ein Bakterium;
- Fig. 6: eine grafische Darstellung eines Bakteriophagen;
- Fig. 7: eine schematische Darstellung einer Infektion eines Bakteriums durch Bakteriophagen;
- Fig. 8: die Lyse des Wirtsbakteriums durch Bakteriophagen nach der Infektion in Fig. 7;
- Fig. 9: eine Wachstumskurve von E. coli mit und ohne Bakteriophagen M13;
- Fig. 10: eine schematische Darstellung eines PEGylierten-Bakteriophagen;
- Fig. 11: eine schematische Darstellung eines PEGylierten lytischen Proteins;
- Fig. 12: eine schematische Darstellung einer Verneblung von Bakteriophagen im Mix mit rekombinanten lytischen Proteinen;
- Fig. 13: eine schematische Darstellung eines Handverneblers durch Desinfektion und Dekontaminierung mit Bakteriophagen und lytischen Proteinen;
- Fig. 14: eine elektronenmikroskopische Aufnahme des Bakteriophagen M13;
- Fig. 15: eine Demonstration der lytischen Aktivität von E. coli Bakteriophagen M13 ke;
- Fig.16: eine 1 : 1 000 000-Verdünnung von Bakteriophagen in einer Kultur;
- Fig. 17: eine 1 : 10 000 000-Verdünnung von Bakteriophagen in einer Kultur;
- Fig. 18: eine 1 : 100 000 000-Verdünnung von Bakteriophagen in einer Kultur;
- Fig. 19: eine 1 : 1000 000 000-Verdünnung von Bakteriophagen in einer Kultur;
- Fig. 20: eine Negativkontrolle ohne Bakterien;
- Fig. 21: eine Negativkontrolle ohne Bakteriophagen;
- Fig. 22: einen Bakteriophagen-Plaque-Essay mit unterschiedlichen Konzentrationen des M13 KE; und
- Fig. 23: eine schematische Darstellung eines Fusionsproteins.

Desinfektionsmaßnahmen durch chemische oder physikalische Verfahren sind entscheidend bei der Bekämpfung von Infektionskrankheiten. Häufig sind diese Verfahren extrem toxisch und können nicht in geschlossenen Räumlichkeiten (Internationale Raumstation, U-Boote, usw.) angewendet werden. Auch die Entstehung multiresistenter Keime ist zunehmend ein Problem in Krankenhäusern und kann nur unzureichend durch die Verwendung von herkömmlichen Desinfektionsmitteln 10 beseitigt werden. Für den Menschen ungefährliche Desinfektionsmittel 10, die aber auf der anderen Seite hoch bakterizid wirken, sind selten verfügbar.

Bakteriologische Verunreinigungen 12 werden in der Regel durch die Verwendung eines geeigneten Desinfektionsmittels 10 beseitigt. Häufig sind diese Desinfektionsmittel 10 gesundheitsgefährdend und können speziell in geschlossenen Habitaten 14 nur eingeschränkt verwendet werden. Auch in schlecht zugänglichen Bereichen ist eine Verwendung klassischer Desinfektionsmittel 10 nur schwer möglich. Auf Grund ihres bakteriziden Wirkungsmechanismus sind präventive wachstumshemmende Maßnahmen nicht möglich. Häufig sind klassische Desinfektionsmittel 10 eine wässrige Lösung, die so gut wie gar nicht bei hoch sensitiven elektrischen Geräten eingesetzt werden kann.

Durch Verwendung von geeigneten Bakteriophagen 16 ist eine gezielte Desinfektion bzw. Dekontamination von bakteriologischer Verunreinigung 12 möglich. Bakteriophagen 16 sind die natürlichen Feinde der Bakterien 18 und mit ihnen ist eine Art mikrobiologische Schädlingsbekämpfung möglich. Auch könnten Bakteriophagen 16 als Präventivmaßnahme einer unkontrollierten Vermehrung bestimmter Bakterien 18 entgegenwirken. Zusammenfassend sollen Bakteriophagen 16 als ein effektives, hochwirksames und biologisches Desinfektions 10- bzw. Dekontaminationsmittel 20 eingesetzt werden.

Folgende Vorteile können dadurch erzielt werden:
1) Effektive und nicht toxische Desinfektion;
2) Präventive Desinfektion;
3) Desinfektion an unzugänglichen Stellen;
4) Ausbringen im trockenen und feuchten Zustand;
5) keine Beschädigung von empfindlichen Geräten (Elektrogeräte);
6) Entfernung der Bakteriophagen 16 aus der Luft durch Filtration;
7) gezieltes Abtöten eines bestimmten Bakterienstamms, ohne die gesamte Bakterienflora zu vernichten;
8) Medizinische Anwendung im Bereich der Phagentherapie bei Sepsis, schlecht heilenden Wunden, als Antibiotikaersatz, zur Anwendung gegen multiresistente Keime (MRSA), bei Nasennebenhöhlenentzündungen und Augenentzündungen, usw;
9) in der Landwirtschaft zur Bekämpfung bakteriologischer Tier- und Pflanzenerkrankungen;
10) in der Lebensmittelproduktion zur nicht toxischen Dekontaminierung.

Bakteriophagen 16, kurz "Phagen" wurden unabhängig am Anfang des neunzehnten Jahrhunderts durch zwei Wissenschaftler entdeckt. 1915 beschrieb Frederick W. Twort die transparente Transformation von Mikrokokken-Kolonien durch eine nicht bekannte Substanz. Zwei Jahre später, 1917, postulierte Félix d'Hérelle, dass eine beobachtete Lyse von Bakterien 18 auf dem Vorhandensein eines Virus beruht. Basierend auf seiner Beobachtung nannte er diesen Virus "Bakteriophage" 16. Heute weiß man, dass Bakteriophagen 16 Viren sind, die Bakterien 18 infizieren können. Die Größe dieses Virus liegt zwischen zwei Nanometern und zweihundert Nanometern und sie werden durch ihre Morphologie identifiziert und durch ihre Nukleinsäure klassifiziert. Das Genom eines Phagen 16 hat eine Größe zwischen fünf bis fünfhundert kbp (Kilobasenpaare) und kann als DNA oder RNA existieren. Die Morphologie der Bakterienviren ist filamentös oder hat einen Charakter, der durch einen Kopf und einen Schwanz charakterisiert ist. Meistens ist das genetische Material in dem ikosaeder-förmigen Kopf enthalten und der Schwanz wird verwendet, um sich an dem Wirt (Bakterium 18) anzulagern, wonach schließlich eine Injektion der Nukleinsäure durch die Bakterienmembran erfolgt.

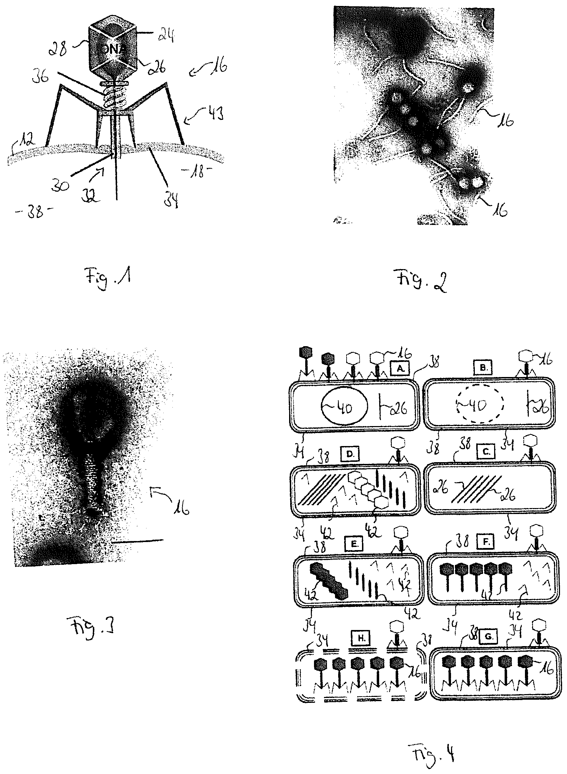

Fig. 1 zeigt schematisch einen Bakteriophagen 16, der an einem Bakterium 18 angelagert ist. Ein Kopf 24 des Bakteriophagen 16 beinhaltet seine DNA 26 und ist mit einer Proteinbeschichtung 28 versehen. Mit einem Kern 30 des Schwanzes 32 injiziert der Bakteriophagen 16 seine DNA 26 durch die Zellwand 34 des Bakteriums 18. Zwischen Kopf 24 und Schwanz 32 wird die injizierte DNA 26 von einer Umhüllung 36 geschützt.

Fig. 2 zeigt filamentöse Bakteriophagen 16.

In Fig. 3 ist ein strukturierter Bakteriophage 16 mit dem Namen T4 gezeigt.

Da Bakteriophagen 16 sich nicht selbst reproduzieren können, benötigen sie ein Wirtsbakterium 18 mit einem intakten Metabolismus. Der erste Schritt, um die Reproduktion zu starten, ist eine spezifische Anbindung des Phagen 16 an einem Rezeptor an der Oberfläche des Wirtes. Dann wird das genetische Material in den Wirtsorganismus injiziert und der lytische Zyklus kann beginnen. Während der Zellteilung des infizierten Bakteriums 18 werden die Nukleinsäuren der Bakteriophagen 16 ebenfalls repliziert und die Wirtszelle wird umprogrammiert. Der Wirtsmetabolismus wird dann zur Produktion von Bakteriophagen 16 verwendet und die Bakteriophagenkomponenten werden in einer latenten Phase zu einem neuen Virus zusammengesetzt. Um den neuen Bakteriophagen 16 herauszulassen, wird der Wirt schließlich durch ein spezifisches Enzym lysiert und ein neuer lytischer Zyklus kann starten.

Fig. 4 zeigt die Vermehrung von Bakteriophagen 16.

In Schritt A absorbieren Bakteriophagen 16 an einer Wirtszelle 38 mit intaktem Wirtsgenom 40. Der Bakteriophagen 16 injiziert seine DNA 26 in die Wirtszelle 38. In Schritt B wird das Wirtsgenom 40 zerstört. In Schritt C erfolgt die Replikation der DNA 26 des Bakteriophagen 16. In Schritt D werden durch die Wirtszelle 38 einzelne Zwischenbauteile 42 wie z.b. leere Köpfe 24 erzeugt. In Schritt E erfolgt dann das Einfügen der Bakteriophagen-DNA 26 in die zuvor leeren Köpfe 24. In Schritt F und G werden die Bakteriophagen 16 zusammengebaut. Danach folgt in Schritt H die Lyse und das Freilassen der hergestellten Bakteriophagen 16. Die Zeit, die bis zur Lyse vergeht, variiert je nach Wirtssystem des Bakteriophagen 16, kann jedoch etwa zehn Minuten sein.

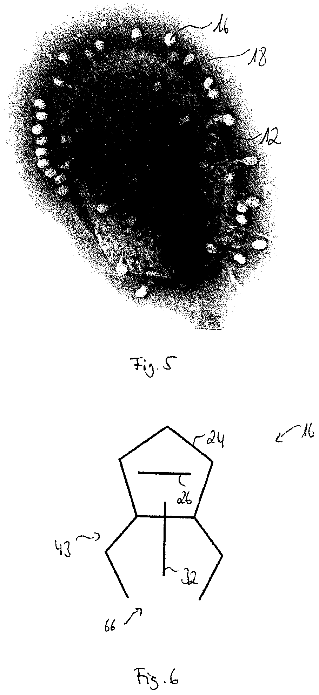

Fig. 5 zeigt eine Aufnahme eines Elektronenmikroskops, das den Angriff eines Bakteriums 18 durch Bakteriophagen 16 zeigt. Bakteriophagen 16 können überall in der Natur gefunden werden. Sie sind genauso ubiquitär wie Bakterien 18, da sie Bakterien 18 als Wirtszellen 38 zur Reproduktion benötigen. Jeder Phagen-Typ hat natürliche Gegenstücke in der Welt der Bakterien 18. Bakteriophagen 16 infizieren nur diese gegensätzlichen Bakterienorganismen, lassen jedoch alle anderen Bakterien 18 unberührt. Die Bakteriophagen 18 infizieren und daher inaktivieren ihre Gegenspieler-Bakterien 18, was bedeutet, dass sie die Bakterien 18 besetzen, sie als Reproduktionswirt benutzen und schließlich durch Lyse zerstören.

Nachfolgend wird diskutiert, wie Bakteriophagen 16 für Dekontaminations-Anwendungen verwendet werden können.

Fig. 6 zeigt eine graphische Darstellung eines Bakteriophagen 16 mit Kopf 24 bzw. Capsid mit DNA 26 als Erbgut und kontraktiler Scheide 66 in der Schwanzfieber als Injektionsapparat für die DNA 26.

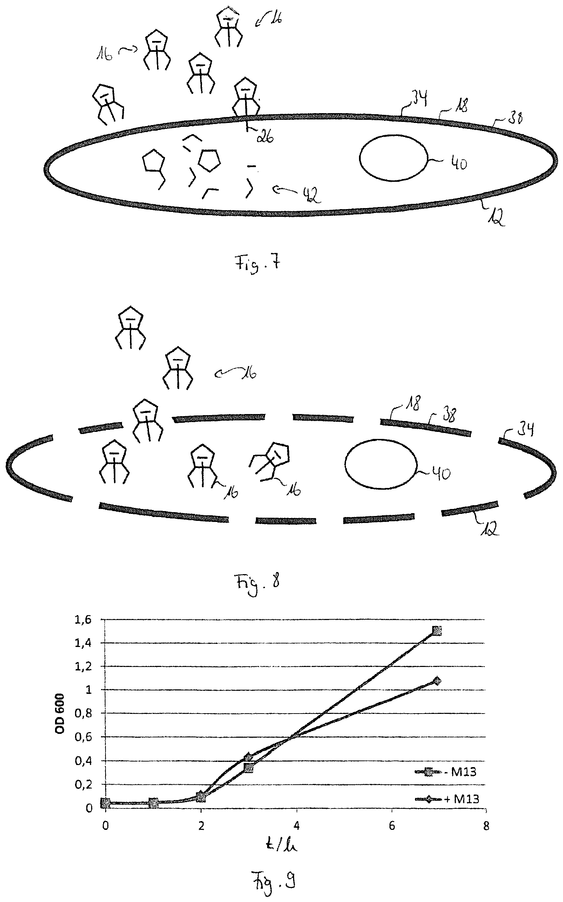

Fig. 7 zeigt eine schematische Darstellung einer Infektion eines Bakteriums 18 durch Bakteriophagen 16 bei Beginn eines lydischen Zykluses, wobei eine Bakteriophage 16 auf der Bakterienoberfläche bzw. der Bakterienzellwand andockt und ihre DNA 26 injiziert. Im Inneren des Bakteriums 18 werden neue Bakteriophagen 16 zusammengebaut (Assembly). Fig. 8 zeigt eine schematische Darstellung der Lyse des Wirtsbakteriums durch Bakteriophagen 16 am Ende des lydischen Zykluses, wobei die lysierte und perforierte bakterielle Zellwand 34 ein gereiftes und fertiges Bakteriophagen 16 austreten lässt, weil in der Zellwand 34 ein Loch entstanden ist.

Bakteriophagen 16 können in folgenden System angewendet werden:

### 1) Desinfektion hygienisch sensitiver Bereiche

Bakteriophagen 16 sind nicht toxisch für den Menschen und können in hygienisch sensitiven Bereiche bzw. Habitaten 14 des öffentlichen Lebens zur Desinfektion und Dekontamination eingesetzt werden. Mit hygienisch sensitiven Bereichen sind alle Gegenstände und Hilfsmittel gemeint, die häufig von sehr vielen Menschen berührt werden. Dies sind insbesondere Türklinken, Druckknöpfe, Handläufe, usw. Hygienisch sensitive Bereiche finden sich an folgenden Lokalitäten:
- Öffentliche Einrichtungen mit Menschenansammlungen z. B. Bahnhöfe, Flughäfen, Volksfeste, Kantinen, Gerichte, öffentlicher Verkehr;
- Öffentliche Behörden, Postämter;
- Schulen und Kindergärten;
- Krankenhaus;
- Toiletten, insbesondere öffentliche Toiletten.

### 2) Desinfektion und Dekontamination abgeschlossener Habitate 14

Bei klassischen Desinfektionsmaßnahmen wird das Desinfektionsmittel 10 häufig versprüht oder großflächig aufgebracht. Nach der dementsprechenden Einwirkzeit werden die Räumlichkeiten zunächst gelüftet, um einer toxische Wirkung bei dem Menschen entgegenzuwirken. In abgeschlossenen Habitaten 14 sind diese Maßnahmen jedoch nicht möglich, und es sollte vorzugsweise auf nicht toxische Desinfektionsmittel 10, wie zum Beispiel Bakteriophagen 16 zurückgegriffen werden. Abgeschlossene Habitate 14 sind Räumlichkeiten oder Bereiche, die von dem umgebenden Milieu abgetrennt sind. Insbesondere sind dies:
- Internationale Raum Station (ISS);
- Raumschiff bei Marsmissionen oder langen Raumflügen;
- Flugzeug;
- U-Boot;
- Kreuzfahrtschiffe;
- Bahn;
- U-Bahn;
- S-Bahn;
- Gewächshäuser.

Häufig sind diese abgeschlossenen Habitate 14 mit hoch empfindlichen elektrischen Geräten ausgestattet, so dass eine feuchte Desinfektion (z.B. Vernebelung) zu einer Zerstörung dieser Geräte führen könnte. Auch in dieser Hinsicht wäre eine trockene Desinfektion mit Bakteriophagen 16 ein geeigneter Weg.

### 3) Präventive Anwendung

Klassische bakterizide Desinfektionsmittel 10 töten die Keime nach einer bestimmten Einwirkzeit. Nach der bakteriziden Wirkung des Desinfektionsmittels 10 kommt es meistens zu einer erneuten Besiedlung der Keime, die weitere Desinfektionsmaßnahmen nach sich zieht. Um einer Neubesiedlung entgegenzuwirken, können Bakteriophagen 16 zum Einsatz kommen. Bakteriophagen 16 benötigen zu ihrer Vermehrung die bakterielle Wirtszelle 38, die nach dem Zusammenbau der neuen Bakteriophagen 16 lysiert wird. Dies bedeutet, dass der Bakteriophage 16 in das Wachstum einer bestimmen Bakterienpopulation massiv eingreift und die Wachstumskurve zum Abknicken kommt, wie in Fig. 9 gezeigt, wo als experimentelles Beispiel die abknickende Wachstumskurve von E. coli (NEB 5-alpha F'lq) als Kontaminationsspezies 37 gezeigt ist, die ein Wachstum der Bakterien 18 mit bei einer Zugabe des Bakteriophagen M13 nach drei Stunden Wachstum in Flüssigkultur (LB-Medium), mit +M13 gekennzeichnet, und ohne den Bakteriophagen M13, mit - M13 gekennzeichnet, zeigt.

Auf Grund dieser wachstumshemmenden Wirkung und der fehlenden Toxizität der Bakteriophagen 16 können diese als ein präventives Desinfektionsmittel 10 eingesetzt werden. Präventiv meint hier ein Ausbringen der Bakteriophagen 16 vor einer potenziellen Vermehrung schädlicher Keime. Sollte es zu einem Wachstum der Bakterien 18 kommen, würden die zuvor ausgebrachten Bakteriophagen 16 die Vermehrung der Bakterien 18 massiv hemmen. Anwendungen für einen präventiven Einsatz der Bakteriophagen 16 sind:
- Besprühung oder Beimengung von Bakteriophagen 16 zu leicht verderblichen Lebensmitteln und Getränken, insbesondere Fleisch- und Wurstwaren (Listeria sp.), Hackfleisch, Eier (Samonella. Sp.), Milchprodukte (Listeria sp.), Mineralwasser;
- Zugabe in Trinkwasser zur Verhinderung einer Cholera- oder Typhusepidemie;
- Besprühen von Wald- und Wiesenflächen mit Bakteriophagen 16, die Borrelia sp. lysieren können, als Präventivmaßnahmen zur Borreliose-Bekämpfung.

### 4) Anwendung im Bereich Wasser, Trinkwasser und Prozesswasser

Legionella pneumophila ist ein im Wasser endemisches Bakterium 18 und ist der Auslöser der Legionellis (Legionärskrankheit). Ein Wachstum dieser Bakterien 18 im Trinkwasser beruht zumeist auf fehlender Wasserzirkulation und Wassertemperaturen im Bereich von 25 - 50°C. In zu großen Warmwasserspeichern oder Rohrleitungen verbleibt das Wasser länger und die Organismen haben mehr Zeit zum Wachstum. Auch bei zeitweise geringer oder fehlender Wasserentnahme kommt es zu stehendem Wasser und damit zu Wassertemperaturen, die das Koloniewachstum zusätzlich begünstigen. Als Desinfektionsmaßnahme gegen ein unkontrolliertes Wachstum von Legionellen können Bakteriophagen 16 eingesetzt werden. Folgende Bakteriophagen 16 wären zur Legionellenbekämpfung geeignet:
- ΦLP6;
- ΦLPJ1;
- ΦLPJ5;
- ΦLPJ6;

Häufig entsteht in den Rohrleitungen von Trink- oder Prozesswassersystemen ein Biofilm bestimmter Bakterien 18, der eine potenzielle Gesundheitsgefährdung für den Menschen darstellt. Durch Zugabe geeigneter Bakteriophagen 16 kann eine Biofilmausbildung verhindert oder beseitigt werden. Besonders im Bereich des Prozesswassers der Pharmaindustrie ist ein hygienisch einwandfreies Wasser besonders bevorzugt und eine Biofilmausbildung sollte vorteilhaft verhindert werden. Besonders stark verzweigte Rohrleitungssysteme stellen einen potenziellen Nährboden für Biofilme dar, die nur unzureichend mit herkömmlichen Desinfektionsmitteln 10 gespült werden können. Besonders an schlecht zugänglichen Bereichen können Bakteriophagen 16 zum Einsatz kommen und den Biofilm degradieren.

### 5) Lebensmittelindustrie

Auch bei der hygienisch einwandfreien Herstellung von Lebensmittel können geeignete Bakteriophagen 16 zum Einsatz kommen. Anwendungsbereiche wären:
- Fleisch- und Wurstwarenherstellung (Bakteriophagen 16 gegen Clostridium botulinum, Clostridium sp., Listeria monocytogenes, Listeria sp.);
- Fisch, Meeresfrüchte und deren Produkte;
- Wein-, Bier- und Spirituosenherstellung und Essigherstellung;
- Softgetränke- und Fruchtsaftherstellung;
- Speiseeisherstellung;
- Süßwarenherstellung;
- Getreideverarbeitung;
- Genussmittelherstellung (Kaffee, Tee, Tabak, Schokolade);
- Eier- und Teigwarenindustrie (Bakteriophagen 16 gegen Salmonella sp.);
- Herstellung von Molkereiprodukten, insbesondere Käse und Sauermilchprodukte;
- Backwarenherstellung;
- Obst-, Gemüseverarbeitung (Lebensmittelskandale, Enterohämorrhagische Escherichia coli, EHEC);
- Herstellung von Konserven (Bohnen, Clostridium botulinum);
- Herstellung von Spezialnahrungsmitteln und Sondennahrung (z.B. Astronautenkost und Kost für Pflegebedürftige);
- Kräuter- und Würzmittelherstellung;
- Futtermittelherstellung;
- Nahrungsergänzungsmittelindustrie.

Weiterhin können bei der Prozessierung oder Veredelung von Lebensmitteln Bakteriophagen 16 eingesetzt werden. Als Beispiel dienen sämtliche Vergärungs- oder Reifungsprozesse, bei denen ein bestimmter Organismus kultiviert werden muss. Bakteriophagen 16 können gezielt bei diesen Prozessen ein Wachstum unerwünschter bakteriologischer Kontaminationen verhindern (z.B. Fehlgärungen oder Fehlreifungen bei der Käseherstellung).

### 6) Biotechnologie

Bakteriophagen 16 können auch bei Prozessen in der Biotechnologieindustrie zum Einsatz kommen. Als Zusatz bei der Fermentation bestimmter biotechologischer Prozesse kann eine Fehlprozessierung durch Bakteriophagen 16 verhindert werden. Bei diesen Prozessen kann es zu einem Überwachsen des Fermenters kommen. Ausgelöst wird diese Überwachsung durch eine bakteriologische Kontamination im Nährmedium (z.B. Kultivierung von Hefezellen kontaminiert mit Bakterien 18). Als präventive Maßnahme können Bakteriophagen 16 dem Nährmedium bei Beginn der Fermentation zugesetzt werden. Beispiele aus der Biotechnologie wären:
- Herstellung rekombinanter Proteine;
- Herstellung von Biopharmazeutika;
- Herstellung von Antikörpern;
- Biokraftstoffherstellung im Photoreaktor;
- Biokraftstoffherstellung im "open Pond-Verfahren".

### 7) Medizinische Anwendungen

Das bisher bekannteste Beispiel für die Anwendung der Bakteriophagen 16 ist die so genannte Bakteriophagentherapie. Die therapeutische Anwendung von Bakteriophagen ist vom Gegenstand dieser Anmeldung jedoch nicht umfasst. Die Bakteriophagentherapie ist der therapeutische Gebrauch von Bakteriophagen 16 zur Behandlung krankheitsverursachender bakterieller Infektionen. Bei folgenden Beispielen können Bakteriophagen 16 erfolgreich eingesetzt werden:
- Bakterielle Infektionen aller Art, insbesondere für äußerliche Anwendungen;
- Verbrennungen, Verbrühungen;
- Infizierte Operationswunden, z.b mit Staphylococcus aureus oder MRSA;
- Infektionen der oberen Atemwege (Laryngitis);
- Ohreninfektionen (Otitis), Mittelohrentzündung (Otitis media acuta, Otitis media chronica);
- Nasennebenhöhleninfekt (Sinusitis);
- Bakteriologische Augenentzündung (Konjunktivitis);
- Hautinfektionen und Hauterkrankungen wie z.B. Akne vulgaris , Ekzeme;
- Mundhygiene, Bekämpfung Paratontose (Parodontitis, Gingivitis), Zahnkaries (Caries dentium);
- Bakteriologische Durchfallerkrankungen, Darminfekte (Dysenterie);
- Bakteriologische Erkrankungen des Urogenitalsystems, Blasenentzündung (Zystitis), bakterielle Prostatitis, Kolpitis, Vaginitis;
- Sepsis;
- Heilung offener und schlecht heilender Wunden, insbesondere bei immunsupprimierten Patienten, poly-mikrobiellen Biofilmen auf chronischen Wunden, Ulcus (Diabetes mellitus, HIV-Infektionen, Transplantationspatienten);
- Antibiotikaersatz;
- Bekämpfung multiresistenter Keime, insbesondere MRSA.

Bakteriophagen 16 zur medizinischen Anwendung können von folgenden Firmen bezogen werden:
Biophage Pharma Inc (http://www.biophage.com); Exponential Biotherapies, Inc (http://www.expobio.com); Gangagen Inc (http://www.gangagen); Hexal Gentech (http://www.hexal-gentech.de); InnoPhage (http://www.innophage.com); Intralytix, Inc (http://www.intralytix.com); New Horizons Diagnostics Inc (http://www.nhdiag.com/index.htm); Novolytics Ltd (http://www.novolytics.co.uk); Phage Biotech Ltd (http://www.phage-biotech.com); Phage International, Inc (http://www.phageinternational.com); Phage Therapy (http://www.phagetherapycenter.com); Targanta (http://www.targanta.com); Therapeutics Biochimpharm, Inc (http://www.biochimpharm.ge); Enzobiotics/New Horizon Diagnostics (http://www.nhdiag.com); MicroStealth Technologies; Phage Therapeutic; PhageGen (http://www.phagegen.com); PhageTech (http://www.phagetech.com); Phico Therapeutics (http://www.phicotherapeutics.co.uk).

### 8) Landwirtschaftliche Anwendung

In der Landwirtschaft kommen heute routinemäßig Antibiotika zum Einsatz. Dieser Einsatz wird aber zunehmend kritisch gesehen, da durch die Verwendung vermehrt multiresistente Keime generiert werden und diese Antibiotika häufig in den Nahrungsmitteln nachgewiesen werden. Bakteriophagen 16 können sehr gut dazu beitragen, die massive Anwendung von Antibiotika zu reduzieren, die therapeutische Anwendung von Bakteriophagen ist vom Gegenstand dieser Anmeldung jedoch nicht umfasst. In weiten Bereichen der Landwirtschaft können Bakteriophagen 16 bei sämtlichen bakteriologisch verursachten Erkrankungen eine alternative Lösung sein. Bakteriophagen 16 können bei folgenden Beispielen eingesetzt werden:
- Mastbetriebe, Geflügel, Schweine und Rindermast (Botulismus; Brucellose der Rinder, Schweine, Schafe und Ziegen; Chlamydiosen der Säugetiere; Escherichia coli; Enzootischer Campylobacter-Abort des Rindes; Vibrionenseuche der Rinder; Leptospirose; Milzbrand Anthrax, Hadernkrankheit, woolsorter's disease; Pasteurellose; Paratuberkulose; Salmonellose; Tuberkulose; Q-Fieber);
- Milchproduzierende Betriebe, Milchkühe;
- Schafe und Ziegen;
- Pferdezucht;
- Obstanbau, insbesondere Feuerbrand (Phage 16 gegen Erwinia arnylovora);
- Getreide, Gemüse, Baumwolle, Reis, Hirse, Walnuss, Sojabohne, Mais, Zuckerrübe und Zuckerrohr, Erdnüsse, insbesondere verursacht durch Xanthomonas sp. (Bakteriophage 16 gegen diverse Xanthomonas-Arten);
- Palmölplantage und Dattelpalmplantagen;
- Bienenzucht, Faulbrut verursacht durch Melissococcus plutonius, Paenibacillus larvae, Farn. Enterococcaceae oder Farn. Paenibacillaceae (Bakteriophagen 16 gegen diese Familien und Arten);
- Pilzkulturen, pharmakologisch als auch Speisepilzzucht;
- Aquakultur (Süßwasser, z.B. Forellenzucht, Karpfenzucht als auch Seewasser, z.B. Lachs, Heilbutt);
- Störzucht zur Kaviarproduktion;
- Algenzucht für Speisen (Asiafeinkost) und Biofule;
- Austernzucht;
- Zierpflanzen, Zimmerpflanzen, Schnittblumen, insbesondere verursacht durch Xanthomonas sp.

Im Folgenden wird auf die Biotechnologie zur Verwendung der Bakteriophagen 16 eingegangen.

Es können rekombinante lytische Bakteriophagenproteine 44 verwendet werden.

Neben der Verwendung ganzer Bakteriophagen 16 ist es auch möglich, nur die lytische Komponente 46 zur Desinfektion und Dekontamination zu verwenden. Als lytische Komponente werden alle Gene bezeichnet, die für die Lyse der Bakterien 18 verantwortlich sind. Von diesen Genen ausgehend können dann durch Expression die eigentlichen lytischen Proteine 48 hergestellt werden. Ein westlicher Aspekt dieser rekombinanten lytischen Bakteriophagenproteine 44 ist die Unfähigkeit der Vermehrung, da es sich nur um eine Komponente der Bakteriophagen 16 handelt, die nicht vermehrungsfähig ist. Als Beispiel kann hier das Bakteriophagenprotein Lysin des Enterobakterioenphage HK97 erwähnt werden, dessen Sequenz 477 Basenpaare aufweist (SEQ ID NO 1).

Folgende lytischen Bakteriophagenproteine 44 können als Grundlage für ein rekombinantes Protein dienen und zum Zweck der Desinfektion und Dekontamination eingesetzt werden. Nachfolgend sind die "Accessions-Nummern" der dementsprechenden Proteine aufgeführt:
NP_040645.1, YP_007004318.1, NP_037753.1, ZP_19629098.1, ZP_07138615.1, ZP_12014152.1, YP_002533525.1, ZP_6825465.1, ZP_16815884.1, NP_958236.1, YP_541657.1, ZP_03027303.1, YP_006119300.1, ZP_07124732.1, YP_001457076.1, NP_037696.1, ZP_12354841.1, ZP_19853604.1, ZP_16432853.1, YP_007151787.1, ZP_12051327.1, YP_006134660.1, YP_215336.1, 1D9U_A, ZP_12242934.1, ZP_19727708.1, YP_003235093.1, ZP_11926171.1, ZP_16820714.1, ZP_06991123.1, ZP_18241921.1, YP_002636897.1, 711077A, ZP_11928005.1, YP_007112069.1, ZP_12253558.1, ZP_12274576.1, 1AM7_A, ZP_13891781.1, ZP_11953067.1, ZP_13865051.1, ZP_11973744.1, ZP_07189125.1, ZP_19750000.1, YP_007112338.1, ZP-07122845.1,ZP-19725860.1,ZP-02815436.1,ZP 12252158.1, ZP_07136459.1, ZP_19610696.1, ZP_16460072.1, ZP_13824188.1, ZP_03034671.1, ZP_03059439.1, ZP_12004488.1, ZP_12042423.1, ZP-19828629.1, ZP-14456877.1, ZP-19861830.1, ZP-20096564.1, ZP_19715955.1, YP_007151732.1, NP_287361.1, ZP_06661874.1, ZP_16865786.1, ZP_19623142.1, ZP_08347529.1, ZP_17934976.1, ZP_19839524.1, ZP_16843781.1, YP_541977.1, ZP_19835052.1, ZP_04537233.1, YP- 002330021.1, ZP-14445604.1, ZP-19630178.1, ZP-18517605.1, ZP_12312772.1, ZP_18689648.1, ZP_17684367.1, ZP_13660040.1, ZP_07184290.1, ZP_11522382.1, YP_006169473.1, ZP_14434031.1, YP_006132111.1, ZP_08364809.1, NP_456404.1, YP_002555872.1, ZP_12235107.1, ZP_11504204.1, YP_002381782.1, ZP_16835211.1, ZP_18974999.1, ZP_14775592.1, ZP_19637574.1, ZP_13831044.1, ZP_16818292.1, YP_003500636.1.

Lytische Proteine 48 müssen nicht zwingend Ihren Ursprung aus Bakteriophagen 16 haben. So ist auch der Einsatz folgender rekombinanter und nicht rekombinanter lytischer Enzyme 50 möglich:
- Lysozym 52;
- Lysostaphin 54 (gegen Staphylococcus aureus, Staphylococcus sp.) ;
- lytM 56;
- Proteasen 58;
- Hydrolasen 60.

Im Folgenden wird die genetische Modifikationen der Bakteriophagen 16 erläutert.

Die Verwendung von bestimmten Bakteriophagen 16 kann auch gewisse Risiken bergen. So integrieren mache Bakteriophagen 16 in das Bakteriengenom (Lysogenie) und werden mit dem Wirtsgenom 40 repliziert (lysogener Zyklus des Bakteriophagen 16). Kommt es dann zu Reifung des Bakteriophagen 16, so können Teile des bakteriellen Genoms ausgeschnitten und den fertigen Bakteriophagen 16 integriert werden. Bakteriophagen 16 können somit Vehikel für den Transport bakterieller Gene sein. Der als Transduktion bezeichnete Gentransfer zwischen Bakterien 18 durch Bakteriophagen 16 kann auch zum Transport sogenannter Virulenzfaktoren dienen. Ein Virulenzfaktor ist eine Eigenschaft eines Bakteriums 18 (z.B. ein Gen), das seine pathogene Wirkung bestimmt. Um einer Transduktion bestimmter Virulenzfaktoren entgegenzuwirken, sind in dem im erfindungsgemässen Verfahren eingesetzten Bakteriophagen 16 die Transdutionsgene durch gezielte Mutation in Form von Gen- Knockout inaktiviert worden. Folgende Mutationarten können zur Anwendung kommen:
- Punktmutation;
- Deletion;
- Insertion;
- Inversion
- Rasterschubmutation.

Auch Mutationen, die die Lysogenie (Integration des Bakteriophagen 16 in das Bakteriengenom) betreffen, können das Risiko des Gentransports minimieren. In Bezug auf die genetische Manipulierung der Bakteriophagen 16 sei darauf hingewiesen, dass es sich bei dem Gen-Knockout nicht um eine gentechnische Arbeit handelt und der entstandene Organismus kein gentechnisch veränderter Organismus ist (GVO).

Näheres zum gezielten "Gene knockout" bzw. gezielter genetischer Modifizierung bei Viren und Bakteriophagen:
Unter Gen-Knockout wird das vollständige Abschalten (engl. knock-out = "außer Gefecht setzen") eines Gens im Genom eines Organismus verstanden. Das Abschalten des Gens wird durch Gene-Targeting erreicht.

Als gängigste Methode zur genetischen Modifizierung von Bakteriophagen dient das Recombineering. Diese Methode ist z.B. in dem klassischen Methodenbuch zu Bakteriophagen "Bacteriophages: Methodes and Protocols", Fundstelle siehe unten beschrieben.

Eine weitere Methode für das Ausschalten eines Gens ist das sogenannte Gen-Silencing, was insbesondere bei höheren Organismen, z.B. Zellkultur, zur Anwendung kommt.

Es wird für weitere Einzelheiten auf die folgenden Literaturstellen verwiesen:
Knockout of the Sendai virus C gene eliminates the viral ability to prevent the interferon-alpha/beta-mediated responses.,Gotoh B1, Takeuchi K, Komatsu T, Yokoo J, Kimura Y, Kurotani A, Kato A, Nagai Y. FEBS Lett. 1999 Oct 8;459(2):205-10*.*
Recombineering: A powerful tool for modification of bacteriophage genomes., Marinelli LJ, Hatfull GF, Piuri M. Bacteriophage. 2012 Jan 1;2(1):5-14*.*
BRED: a simple and powerful tool for constructing mutant and recombinant bacteriophage genomes. Marinelli LJ1, Piuri M, Swigonovä Z, Balachandran A, Oldfield LM, van Kessel JC, Hatfull GF. PLoS One. 2008;3(12):e3957. doi: 10.1371/journal.pone.0003957. Epub 2008 Dec 17*.*
Modifying Bacteriophage A with Recombineering Lynn C. Thomason, Amos B. Oppenheim, and Donald L. Court Aus Lehrbuch: Bacteriophages: Methods and Protocols, Volume 1: Isolation,Characterization, and Interactions, vol. 501, © 2009 Humana Press, a part of Springer Science+Business Media DOI 10.1007/978-1-60327-164-6 21 Springerprotocols.com

### Gen-Silencing:

Das Gen-Silencing (Gen-Stilllegung) ist ein Vorgang aus der Genetik, bei dem die Genexpression gemindert wird. Beim Gen-Silencing erfolgt die Genregulation durch eine Hemmung der Übertragung (Transkription) einer genetischen Information von der DNA auf die mRNA (transkriptionelles Gen-Silencing) oder der nachfolgenden Übersetzung (Translation) der auf der mRNA gespeicherten Information in ein Protein (post-transkriptionelles Gen-Silencing).
Transcriptional gene silencing mediated by non-coding RNAs Barbora Malecová* and Kevin V Morris Curr Opin Mol Ther. Apr 2010; 12(2): 214-222.

Nachfolgend wird die Stabilisierung der Bakteriophagen 16 durch Zusätze erläutert.

Bakteriophagen 16 als auch lytische Proteine 48 können bei manchen Anwendungsbereichen durch Proteolyse denaturiert und für die Desinfektion unbrauchbar werden. Auch durch lange Lagerung bei Raumtemperatur oder höheren Temperaturen (Aufbewahrung in den Tropen ohne Kühlung) können die Bakteriophagen 16 bzw. lytischen Proteine 48 degradiert und inaktiv werden. Daher ist es wünschenswert, die Bakteriophagen 16 so zu stabilisieren, dass eine möglichst lange Aktivität gewährleistet ist. Bakteriophagen 16 können mit folgenden Methoden und Techniken stabilisiert werden:
- Stabilisierung mit dem Vakuumtrocknungsverfahren;
- Stabilisierung durch Gefriertrocknung bzw. Lyophilisation oder Sublimationstrocknung;
- Stabilisierung durch Zugabe von Sacchariden, Sucrose, Glycerol, Polyolen, Polyethylenglykol, Aminosäuren, Methylamine und anorganischen Salzen.

Eine weitere Möglichkeit zur Stabilisierung der Bakteriophagen 16 ist die Glykosilierung oder PEGylierung.

Ein weiteres Verfahren zur Stabilisierung der Bakteriophagen 16 oder lytischen Proteine 48 ist die chemische Modifizierung in Form von Glykosilierung oder PEGylierung. Bei der PEGylierung werden die Bakteriophagen 16 oder lytischen Proteine 48 mit Polyethylenglycol PEG chemisch verbunden, welches einer Art Maskierung gleicht. Bei dem Verfahren wird die Bakteriophagenoberfläche 62 bzw. Proteinoberfläche 64 mit den kettenförmigen Strukturen des PEG derart beschichtet, dass die Bakteriophagen 16 bzw. Proteine 48 nahezu vollständig von dem PEG umhüllt werden. Diese Umhüllung schützt dann die Bakteriophagen 16 bzw. lytischen Proteine 48 gegen den Abbau denaturierender Enzyme, wie beispielsweise Proteasen. Je nach Anwendung können Polyethylenglycole unterschiedlichster Länge und Struktur zum Einsatz kommen (PEG 400 bis PEG 20.000). Mit Hilfe der PEGylierung ist es möglich, die Bakteriophagen 16 bzw. lytischen Proteine 48 auch in oder an Bereichen einzusetzen, bei denen sie unmodifiziert sehr schnell denaturiert und abgebaut würden. Auch eine innere medizinische Anwendung wäre mit PEGylierten Bakteriophagen 16 bzw. lytischen Proteinen 48 möglich. Diese wären:
- Subcutan;
- Intravenös;
- Oral, Mundspülung;
- Nasal, Nasenspülung;
- Suppositorium.

Die chemische Struktur des PEG sieht folgendermaßen aus:

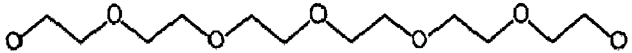

Näheres zur PEGylierung von Bakteriophagen und lytischen Proteinen
Bei der sogenannten PEGylierung werden biopharmazeutische Wirkstoffe oder Diagnostika mit Polyethylenglycol (PEG) chemisch verbunden (konjugiert). Dabei werden kettenförmige Strukturen an den Wirkstoff oder das Diagnostikum angehängt, die diesen bzw. dieses nahezu vollständig umhüllen und somit zuverlässig gegen den vorzeitigen Abbau durch Antikörper oder körpereigene Enzyme, beispielsweise Proteasen, schützen. Durch diese "Maskierung" kann der Wirkstoff (oder das Diagnostikum) Angriffen durch das Immunsystem und enzymatischen Abbauprozessen standhalten, ungehindert an seinen Bestimmungsort gelangen und seine therapeutische Wirkung effizient entfalten. Insbesondere bei biopharmazeutischen Wirkstoffen ist die PEGylierung ein sehr effizientes Verfahren zu einer wesentlichen Verringerung der Immunogenität, zu einer signifikant höheren Proteasestabilität und einer deutlich verlangsamten renalen Ausscheidung (über die Niere).
Es wird für nähere Einzelheiten zur PEGylierung auf folgenden Literaturstellen verwiesen:
PEGylation of Adenovirus with Retention of Infectivity and Protection from Neutralizing Antibody in Vitro and in Vivo., Catherine R. O'Riordan, Amy Lachapelle, Cristina Delgado, Vincent Parkes, Samuel C. Wadsworth, Alan E. Smith, and Gillian E. Francis Human Gene Therapy. May 1999, Vol. 10, No. 8: 1349-1358
PEGylated Viral Nanoparticles for Biomedicine: The Impact of PEG Chain Length on VNP Cell Interactions In Vitro and Ex Vivo., Nicole F. Steinmetz and Marianne Manchester, Department of Cell Biology, Center for Integrative Molecular Biosciences, The Scripps Research Institute, La Jolla, California, 92037 Biomacromolecules, 2009, 10 (4), pp 784-792
PEGylation of vesicular stomatitis virus extends virus persistence in blood circulation of passively immunized mice.,Tesfay MZ1, Kirk AC, Hadac EM, Griesmann GE, Federspiel MJ, Barber GN, Henry SM, Peng KW, Russell SJ. J Virol. 2013 Apr;87(7):3752-9. doi: 10.1128/JVI.02832-12. Epub 2013 Jan 16*.*
PEGylation of bacteriophages increases blood circulation time and reduces T-helper type 1 immune response. Kim KP1, Cha JD, Jang EH, Klumpp J, Hagens S, Hardt WD, Lee KY, Loessner MJ. Microb Biotechnol. 2008 May;1(3):247-57*.*

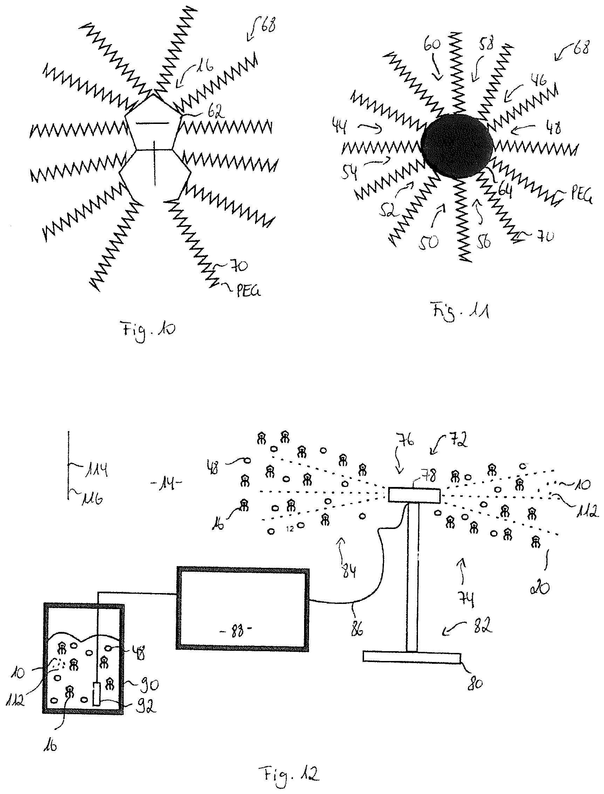

Fig. 10 zeigt eine schematische Darstellung eines PEGylierten Bakteriophagen 16, wobei der Kopf 24 die Bakteriophagen-DNA 26 beinhaltet, die durch die kontraktile Scheide 66 des Bakteriophagen 16 in ein Bakterium 18 injiziert wird. Aus diesem Grund ist es bevorzugt, wenn die kontraktile Scheide 66 von PEG frei verbleibt.

Fig. 11 zeigt eine schematische Darstellung eines PEGylierten lytischen Proteins 48, wobei das lytische Protein 48 mit seinen Aminosäuren, die verknüpft sind über Peptidbindungen und die Aminosäuresequenz, eine Umhüllung 68 von Polyethylenglycolmolekülen 70, PEG, aufweist.

Im Folgenden wird beschreiben, wie die Bakteriophagen 16 ausgebracht werden können.

Die Ausbringung der Bakteriophagen 16 hängt von der dementsprechenden Applikation ab. Folgende Möglichkeiten können in Bezug auf die Bakteriophagen 16 verwendet werden:
- Verneblung mit einer Verneblungsdüse 72;
- Versprühung durch Drucksprühgeräte und Pumpsprühgeräte;
- Lyophilisieren der Bakteriophagen 16 und Ausbringung als trockenes Pulver;
- Zerstäuben von pulverisierten Bakteriophagen 16;
- Binden der Bakteriophagen 16 an Trägermaterialen (Pulvermaterialien, feuchte Tücher);
- Zugabe zu Flüssigkeiten;
- Bepinselungen;
- Auftrag auf Textilien;
- Tinkturen;
- Salben;
- Lotion;
- Gele;
- Spülungen;
- Pulver;
- Pflaster, Verbände;
- Löstabletten und Lutschtabletten;
- Zäpfchen;
- Mundwasser und Zahncreme.

Fig. 12 zeigt eine schematische Darstellung einer Verneblung von Bakteriophagen 16 im Mix mit rekombinanten lytischen Proteinen 48 mittels eines Sandverneblers 74, wobei ein Sprühvernebler 76 mit Verneblungskopf 78 und Standfuß 80 als Ständer 82 des Verneblers 76 Bakteriophagen 16 in einem Sprühnebel 84 erzeugt. Der Vernebelungskopf 78 ist über einen Anschlußschlauch 86 mit einem Kompressor 88 zum Druckaufbau und dieser wiederum mit einem Tank 90 mit Bakteriophagenlösung und lytischen Proteinen 48 im Mix verbunden, die über einen Ansaugstutzen 92 dem Verneblungskopf 78 zugeführt werden.

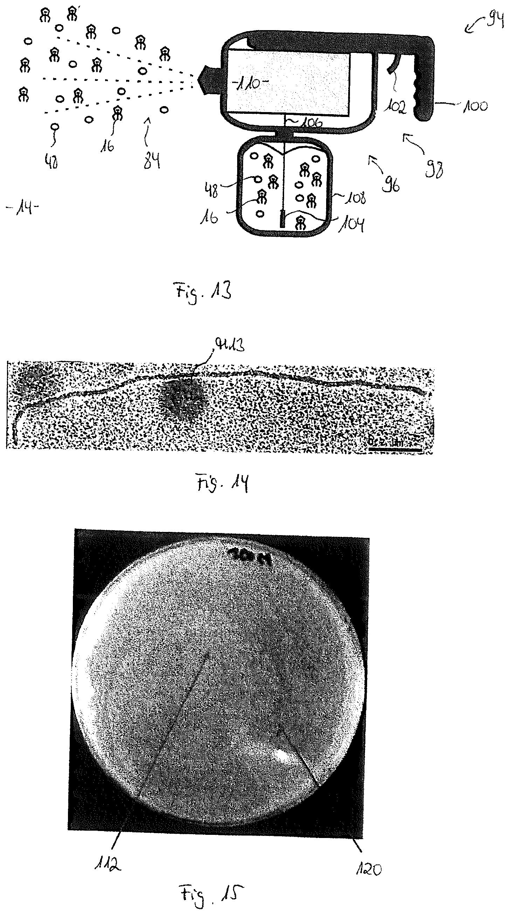

Fig. 13 zeigt eine schematische Darstellung eins Handverneblers 94 zur Desinfektion und Dekontaminierung mit Bakteriophagen 16 und lytischen Proteinen 48, der ein Pumpsystem 96 mit Gehäuse 98, Handgriff 100 mit Handabzug 102, einen Ansaugstutzen 104 mit Ansaugrohr 106, einen Vorratsbehälter 108 mit einer Mixtur aus Bakteriophagen 16 und lytischen Proteinen 48, und eine spezielle Verneblungsdüse 110 aufweist, die eine Scherung bzw. Denaturierung der Bakteriophagen 16 und lytischen Proteine 48 verhindert.

Es können auch Mischungen der Bakteriophagen 16 oder die Bakteriophagen 16 in Kombination mit anderen Dekontaminationsmitteln 20 angewendet werden.

Für Einzelheiten zur Durchführung des Dekontaminationsverfahrens wird auf die deutsche Patentanmeldung DE 10 2013 106 460.4 "Verfahren und Vorrichtung zur Dekontamination eines Habitats" verwiesen.

Oft existieren mehre Bakteriophagen 16, die gegen ein Bakterium 18 wirken. Daher können mehre Bakteriophagenstämme als Mixtur zu Desinfektion oder Dekontamination eingesetzt werden. Auch bei einem multiplen Befall von unterschiedlichen Bakterien 18 kann eine dementsprechende Mixtur unterschiedlichster Bakteriophagen 16 eingesetzt werden. Weiterhin ist ein Einsatz von rekombinanten lytischen Proteinen 48 in Kombination mit Bakteriophagen 16 möglich. Auch können die Bakteriophagen 16 in Kombination mit klassischen Desinfektionsmitteln 10 und Antibiotika 112 eingesetzt werde. Bevorzugt ist hierbei, dass das Desinfektionsmittel 10 bzw. Antibiotikum 112 die Bakteriophagen 16 nicht inhibiert.

Bakteriophagen 16 können durch Filtrierung mit Filtern 114, insbesondere mit HEPA-Filtern 116, wieder entfernt werden.

Gerade in geschlossenen Habitaten 14 ist es wünschenswert, nach erfolgter Desinfektion und Dekontamination die Bakteriophagen 16 zu entfernen. Ein Entfernung der Bakteriophagen 16 aus der Umgebungsluft lässt sich durch geeignete HEPA-Filter 116 (High Efficiency Particulate Airfilter) gut realisieren. Ein positiver Nebeneffekt bei der Entfernung der Bakteriophagen 16 über HEPA-Filter 116, ist die lysogene Wirkung der Bakteriophagen 16 auf der Filteroberfläche und im Inneren des Filters 114. Oftmals und nach langem Gebrauch der HEPA-Filter 116 sind diese vollkommen mit Bakterien 18 und Biofilm überzogen und die Filterwirkung ist stark eingeschränkt. Durch den Einsatz von Bakteriophagen 16 können die Bakterien 18 bzw. der Biofilm auf und in dem Filter 114 teilweise oder vollständig degradiert werden und die Filterwirkung könnte weiterhin optimal aufrecht erhalten bleiben.

Auch eine Entfernung der Bakteriophagen 16 aus Flüssigkeiten ist mit geeigneten Filtern 114 möglich.

Im Nachfolgenden werden Experimente zur Lyse von E. coli durch den Bakteriophagen M13 erörtert.

Es wird die Infektion von E.coli durch den Bakteriophagen M13 in Form eines Plaque-Tests gezeigt. Als Effekt dieser Infektion kann eine Lyse des Bakteriums 18 in einer bakteriellen Umgebung als Virus-Plaque beobachtet werden. Zusätzlich wurde eine M13-Verdünnungsserie erstellt, um eine plaquebildende Einheit (plaque forming unit, pfu) zur quantitativen Messung der Virusinfektion abzuschätzen.

Der Bakteriophage M13 gehört zu der Gruppe der filamentösen Bakteriophagen 16 mit einer zirkulären ssDNA. Der Wirt dieses Virus ist das Bakterium E. coli. M13 kann nur auf E. coli-Zellen wachsen, die einen Fertilitätsfaktor (F-Faktor) tragen. Dieser Faktor ist ein Plasmid (F-Plasmid), dass einen Geschlechtspilum (F-pilum) kodiert. Ohne den F-pilum interagiert der Bakteriophage M13 nicht mit dem Bakterium 18 und M13 könnte die Zellen nicht infizieren.

Fig. 14 zeigt eine elektronenmikroskopische Aufnahme des Bakteriophagen M13.

Für alle Experimente wurde der Bakteriophage M13KE von New England Biolabs, Ipswich, USA verwendet. Die Viren wurden in einem Lagerpuffer erhalten (1 X, TBS, 150 mM NaCl und 50 mM Tris ph 8,0 mit 50% Glycerol) und wurden bei-20°C gelagert. Die Konzentration der gelagerten Bakteriophagenlösung war 1 x 1013 pfu/ml.

Als Wirt für den Bakteriophagen 16 wurde der E.coli-Stamm NEB 5-alpha F'lq von New England, Biolabs, Ipswich, USA erhalten und verwendet.

Die folgenden Parameter wurden verwendet:
- Kultivierung und Medien;
- LB-Medium, pro Liter, 10 Gramm Trypton, 5 Gramm Hefeextrakt, 5 Gramm NaCl und Autoklavierung;
- LB-Kulturplatten, pro Liter, 10 Gramm Trypton, 5 Gramm Hefeextrakt, 5 Gramm NaCl, 15 Gramm Agar oder Argarose und Autoklavierung;
- LB-Topagar, pro Liter, 10 Gramm Trypton, 5 Gramm Hefeextrakt, 5 Gramm NaCl, 7 Gramm Agar und Autoklavierung.

Der Bakteriophagenplaque-Essay ist ein Verfahren zum Titrieren von Bakteriophagen 16. Es können Plaque visualisiert werden, wenn der Bakteriophagen 16 in einer Umgebung mit aktivwachsenden kompatiblen Bakterien 18 ausgesät wird. Jeder Plaque zeigt eine anfängliche Infektion mit einem M13-Bakteriophagen 16, nachgefolgt durch die Lyse von benachbarten Bakterien 18 in der Umgebung. Die Anzahl der Bakteriophagen 16 in einer Probe kann quantifiziert werden durch Ausplattierung von Verdünnungen. Auf einer Platte kann eine Verdünnung ausgebreitet werden, und es können fünf Platten für fünf Verdünnungen verwendet werden. Der nachfolgende Prozess wurde durchgeführt:
1. Wachstum einer Kultur über Nacht;
2. Präparation von LB-Platten;
3. Präparation von Topagar (0,7g Agar pro 100ml LB Broth);
4. Verdünnung der Kultur über Nacht auf etwa 1 zu 10;
5. Wachstum bei 37°C Grad bis OD 600 bei 0,8 bis 1,0, was etwa 2 bis 4 Stunden dauert;
6. Erwärmen der Platte durch Unterbringung in einem 37°C-Inkubator;
7. Schmelzen des Topagars;
8. Erstellen einer Verbindungsserie des M13-Bakteriophagen. Erstellen von Verdünnungen 1 X 110 (1 : 10) bis 1 X 11 (1 : 1000 000 000) Phagen 16 pro 10 µl durch Zugabe von 10 µl M3 Bakteriophagen 16 zu 100 µl sterilem H2O. Bei jedem Schritt wird 10 µl der vorherigen Verdünnung verwendet und 90 µl Wasser hinzugegeben;
9. Zugeben von 500 µl Bakterienkultur in 1 ml Kulturröhrchen zusammen mit 10 µl M13 Bakteriophagen der Verdünnungsserie;
10. Inkubieren für 60 Minuten bei 37°C;
11. Ausschütten der infizierten Bakterien 18 auf eine vorgewärmte LB-Platte und Bedecken mit Topagar;
12. Aushärten lassen des Topagar und Inkubieren der Platten über Nacht bei 37°C;
13.Bestimmung durch Schätzen der cfu.

Die Lyse E. coli durch den Bakteriophagen 13 erfolgt folgendermaßen:
E. coli-Stämme NEB 5-alpha F'lq wurden mit dem Bakteriophagen M13KE infiziert. Nach Infektion startet der lytische Zyklus des Bakteriophagen 16 und die Dekontamination der Bakterien 18 ist sichtbar in Form von klaren Bereichen 118 (Plaque) auf den Kulturplatten in einer bakteriellen Umgebung.

Fig. 15 zeigt die lytische Aktivität des E. coli Bakteriophagen M13KE, wobei klare Bereiche 112 lysierte Bakterien 18 bedeuten und trübe Bereiche 120 ein Wachstum von E. coli als eine bakterielle Umgebung.

Eine Verdünnungsserie wurde aus den M13KE Bakteriophagen hergestellt. Nach Infektion der E. coli mit der Verdünnungsserie wurden die PFU geschätzt. Bei einer Verdünnung von 1 : 10 000 000, die einer Bakteriophagenkonzentration von 1 x 10⁴ Bakteriophagen 16 entspricht, konnte keine bakterielle Umgebung beobachtet werden. Dies zeigt, dass sämtliche Bakterien 18 durch den Virus lysiert worden sind. Bei einer Verdünnung von 1 : 10 000 000, was einer Viruskonzentration von 1 x 10³ Bakteriophagen 16 entspricht, konnten unzählbare Plaques beobachtet werden. Bei der niedrigsten Bakteriophagenkonzentration 1 x 10² und 1 x 10¹ konnten 254 und 48 cfu gezählt werden. Bei der höchsten Bakteriophagenkonzentration von 10¹⁰ bis 10⁶ war die komplette bakterielle Umgebung degradiert, was bedeutet, dass alle Bakterien 18 durch die Bakteriophagen 16 getötet worden sind. Als Negativkontrolle wurden Bakteriophagen-Plaque-Essays hergestellt.

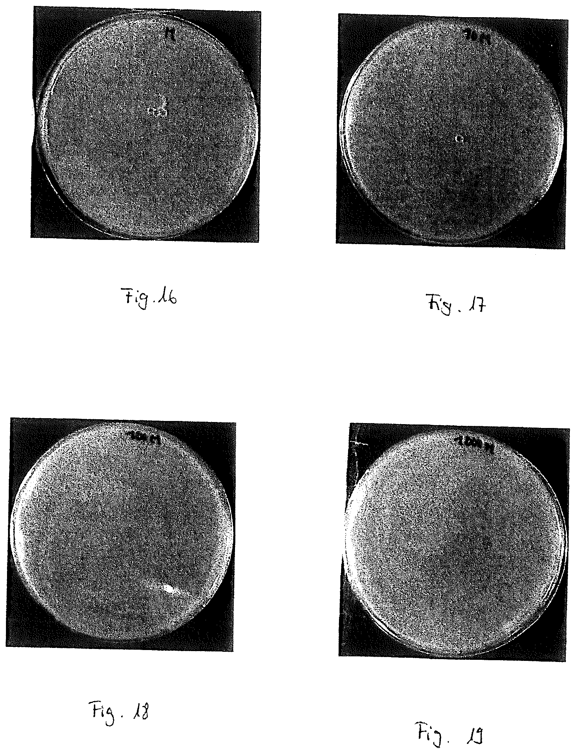

Fig. 16 zeigt eine 1 : 1 000 000-Verdünnung mit 1 x 10⁵ Bakteriophagen 16 pro zehn µl, wobei die gesamte Kulturplatte klar ist und somit alle Bakterien 18 lysiert sind.

Fig. 17 zeigt eine 1 : 10 000 000-Verdünnung mit 1 x 10⁴ Bakteriophagen 16 pro zehn µl, wobei die Plaques nicht zählbar waren.

Fig. 18 zeigt eine 1 : 100 000 000-Verdünnung mit 1 x 10³ Bakteriophagen 16 pro zehn µl, wobei PFU = 254 war.

Fig. 19 zeigt eine 1 : 1000 000 000-Verdünnung mit einmal 10² Bakteriophagen 16 pro zehn µl, wobei die PFU = 48 war.

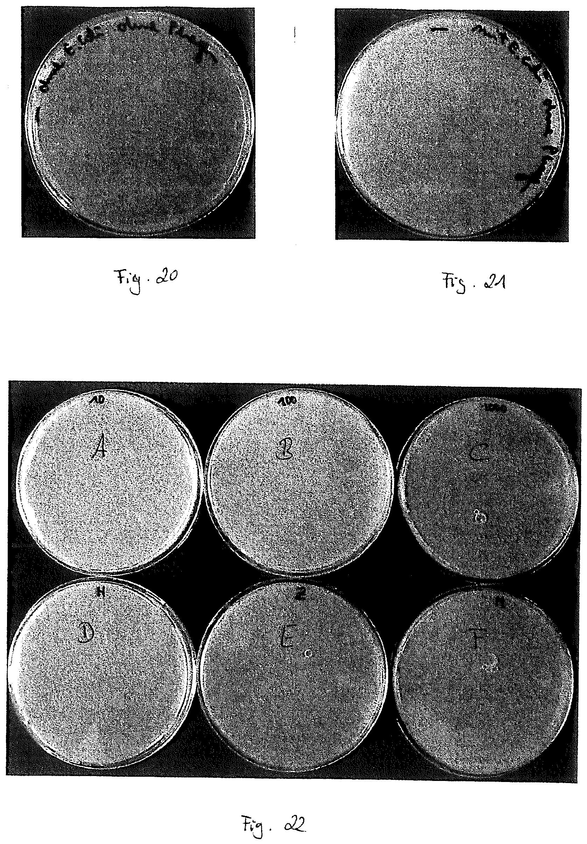

Fig. 20 zeigt eine Negativkontrolle ohne Bakterien 18, wobei keine bakterielle Umgebung beobachtet werden konnte.

Fig. 21 zeigt eine Negativkontrolle ohne Bakteriophagen 16, wobei keine Plaque beobachtet werden konnte.

Fig. 16 bis Fig. 21 zeigen somit Bakteriophagen-Plaque-Essays, die mit unterschiedlichen Konzentrationen von M13KE Bakteriophagen durchgeführt worden sind.

Fig. 22 zeigt Bakteriophagen-Plaque-Essays mit hohen Konzentrationen des M13KE mit Konzentrationen der Bakteriophagen 16 pro zehn µl einer Verdünnungsserie mit A = 1 x 10¹⁰, B = 1 x 10⁹, C = 1 x 10⁸, D = 1 x 10⁷, E = 1 x 10⁶, F = 1 x 10⁵.

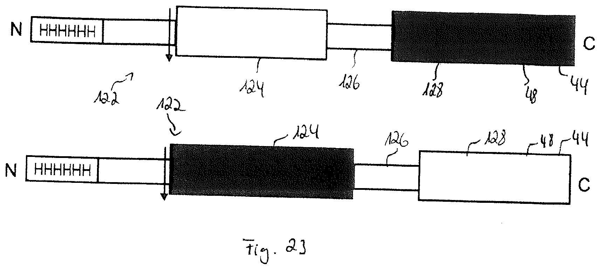

Fig. 23 zeigt ein Fusionsprotein 122 mit einem Bakteriophagenprotein 124, einem Linkerprotein 126 und einem Markerprotein 128.

Die Fusionsproteine 122 können insbesondere mit einem Verfahren hergestellt werden, das in der deutschen Patentanmeldung DE 10 2013 106 462.0 mit dem Titel "Detektionsverfahren zur Detektion von Bakterien, Verfahren zur Herstellung von Fusionsproteinen und Fusionsprotein" beschreiben ist.

Im Folgenden werden Bakteriophagen 16 aufgelistet, die sich für die Dekontamination eignen:
Die Verwendung der Bakteriophagen 16 hängt von der Umgebung ab und wird vorzugsweise an diese Umgebung angepasst.
Bakteriophagen 16 für Pseudomonas aeruginosa:
   pS-5, 109, 119X, 1214, 16, 2, 21, 24, 31, 352, 44, 7, 73, C11, C188, E79, F10, F116, F7, F8, M4, M6, PP7, YS34, pS-5.
Bakteriophagen 16 für Escherichia coli:
   λ(lambda), HK97, M13, λvir, ρ170, p170vir, ρ170 with λvir, ρ80, ρX174, p 174 cs70, τ, 434, 82, M12, MS2, P1 kc, PR772, Qß, T1, T2, T3, T4, T5, T6, T7, f1, f2, Ffm, M13mp18, MS2, Mu, P1 , PhiX174, Qß, U3.
Bakteriophagen 16 für Actinoplanes/Micromonospora sp.:
   Ap3, Ap4, Mm1, Mm3, Mm4, Mm5, phiUW 51.
Bakteriophagen 16 für Amycolatopsis sp.:
   W2, W4, W7, W11.
Bakteriophagen 16 für Bacillus sp.:
   GA-1, Phi 29, SPß.
Bakteriophagen 16 für Cellulosimicrobium sp.:
   05, 013, 08, 011.
Bakteriophagen 16 für Lactococcus sp.:
   P001, P008.
Bakteriophagen 16 für Lechevalieria sp.:
   W1.
Bakteriophagen 16 für Methanothermobacter sp.:
   psi M2 (ΨM2).
Bakteriophagen 16 für Nocardia/Rhodococcus/Gordonia sp.:
   N4, N5, N13, N18, N24, N26, N36.
Bakteriophagen 16 für Nocardioides sp.:
   X6, X10, X24, X1, X3, X5.
Bakteriophagen 16 für Nocardiopsis sp.:
   D3, D4.
Bakteriophagen 16 für Oerskovia sp.:
   02, 03, 06.
Bakteriophagen 16 für Promicromonospora sp.:
   P1, P2, P3, P4.
Bakteriophagen 16 für Pseudomonas sp.:
   21 Lindberg, 7 Lindberg, D3, F10 Lindberg.
Bakteriophagen 16 für Pseudonocardia sp.:
   W3.
Bakteriophagen 16 für Saccharomonospora sp.:
   Tm1, Tm2, Tm3.
Bakteriophagen 16 für Saccharopolyspora sp.:
   Mp1, Mp2.
Bakteriophagen 16 für Salmonella sp.:
   P22.
Bakteriophagen 16 für Serratia sp.:
   kappa ant1152, kappa c1, kappa c154, kappa c2, kappa cts163, kappa cts166, kappa e49, kappa int169, kappa iny170, kappa 152, kappa sus D88, kappa sus F92, kappa sus G70, kappa sus 189, kappa sus K55, kappa sus L90, kappa sus N95, kappa sus 086, kappa sus P87, kappa sus Q4, kappa sus R36, kappa sus 874, kappa sus T96, kappa sus U188, kappa sus V85, kappa sus W93, kappa susA94, kappa tap1, kappa tay1, kappa v164, kappa wildtype, phiHRO-C48/6, psi anp1, psi iat1, psi wildtype, ypsilon 6deltag, ypsilon any1, ypsilon any4, ypsilon any6, ypsilon aps2, ypsilon c1, ypsilon wildtype.
Bakteriophagen 16 für Sporichthya sp.:
   Sp1.
Bakteriophagen 16 für Staphylococcu sp.:
   Twort HER 48.
Bakteriophagen 16 für Streptomyces sp.:
   P23, S1, S2, S4, S6, S7, P26, S3, phi A.streptomycini III, phi8238, SH10, phiC31.
Bakteriophagen 16 für Terrabacter sp.:
   Tb1, Tb2.
Bakteriophagen 16 für Tsukamurella sp.
   Ts1.
Bakteriophagen 16 für Legionella sp.:
   ΦLP6, ΦLPJ1, ΦLPJ5, ΦLPJ6.
Bakteriophagen 16 für Bacillus anthracis:
   vB_BaK1, vB_BaK2, vB_BaK6, vB_BaK7, vB_BaK9, vB_BaK10, vB_BaK11,
   vB_BaK12, vB_BaGa4, vB_BaGa5, vB_BaGa6.
Bakteriophagen 16 für Acinetobacter baumanii
   vB_Aba B37, vB_Aba G865, vB_Aba G866, vB_Aba U7, vB_Aba U8, vB_Acb 1, vB Acb 2.
Bakteriophagen 16 für Brucella sp.:
   Tb.
Bakteriophagen 16 für Clostridium perligenes:
   vB_CpPI, vB_CpII, vB_CpIII, vB_CpIV.
Bakteriophagen 16 für Enterococcus faecalis
   vB_Ec 1, vB_Ec 2, vB Enf.S.4, vB_Enf.S.5.

Alle Bakteriophagen 16 gehören zu den folgenden Familien:
Myoviridae, Siphoviridae, Podoviridae, Tectiviridae, Corticoviridae, Plasmaviridae, Lipothrixviridae, Rudiviridae, Fuselloviridae, Salterprovirus, Guttaviridae, Inoviridae, Microviridae, Cystoviridae, Leviviridae.

### Bezugszeichenliste:

- 10: Desinfektionsmittel
- 12: Bakteriologische Verunreinigung
- 14: Habitat
- 16: Bakteriophagen
- 18: Bakterium
- 20: Dekontaminationsmittel
- 24: Kopf
- 26: DNA
- 28: Proteinbeschichtung
- 30: Kern
- 32: Schwanz
- 34: Zellwand
- 36: Umhüllung
- 38: Wirtszelle
- 40: Wirtsgenom
- 42: Zwischenbauteil
- 43: Schwanzfiber
- 44: Bakteriophagenprotein
- 46: lytische Komponente
- 48: lytisches Protein
- 50: lytisches Enzym
- 52: Lysozym
- 54: Lysostaphin
- 56: lytM
- 58: Protease
- 60: Hydrolase
- 62: Bakteriophagenoberfläche
- 64: Proteinoberfläche
- 66: Kontraktile Scheide
- 68: Umhüllung
- 70: Polyethylenglycolmolekül
- 72: Verneblungsdüse
- 74: Sandvernebler
- 76: Sprühvernebler
- 78: Verneblungskopf
- 80: Standfuß
- 82: Ständer
- 84: Sprühnebel
- 86: Anschlussschlauch
- 88: Kompressor
- 90: Tank
- 92: Ansaugstutzen
- 94: Handvernebler
- 96: Pumpsystem
- 98: Gehäuse
- 100: Handgriff
- 102: Handabzug
- 104: Ansaugstutzen
- 106: Ansaugrohr
- 108: Vorratsbehälter
- 110: Verneblungsdüse
- 112: Antibiotikum
- 114: Filter
- 116: HEPA-Filter
- 118: klarer Bereich
- 120: trüber Bereich
- 122: Fusionsprotein
- 124: Bakteriophagenprotein
- 126: Linkerprotein
- 128: Markerprotein
- M13: Bakteriophagen
- PEG: Polyethylenglycol

## Patentansprüche

1. Nicht-therapeutisches Verfahren zur Dekontamination von bakteriologischen Verunreinigungen (12), aufweisend die Schritte
a) Herstellen eines Dekontaminationsmittels (20) auf Basis von bakteriolytischen Proteinen (48), wobei Bakteriophagen (16) bereitgestellt werden;
b) Verteilen des Dekontaminationsmittels (20) in einem zu dekontaminierenden Habitat (14),
**dadurch gekennzeichnet, dass** die Bakteriophagen (16) in Schritt a) mittels Gen-Knockout durch spezifische Mutation genetisch derart modifiziert werden, dass Transduktionsgene zum Transferieren bakterieller Virulenzfaktorgenen in die Bakteriophagen (16) inaktiviert werden.

2. Verfahren nach Anspruch 1,
**dadurch gekennzeichnet, dass** in Schritt a) zusätzlich Fusionsproteine (122) auf Basis von Bakteriophagenproteinen (124) und/oder bakteriolytische Proteine (48), insbesondere Lysozym (52), Lysostaphin (54), lytM (56), Proteasen (58) und/oder Hydrolasen (60), bereitgestellt werden.

3. Verfahren nach einem der Ansprüche 1 oder 2,
**dadurch gekennzeichnet, dass** der Gen-Knockout durch Punktmutation, Deletion, Insertion, Inversion und/oder Rasterschubmutation, erfolgt.

4. Verfahren nach einem der Ansprüche 1 bis 3,
**dadurch gekennzeichnet, dass** die Bakteriophagen (16) stabilisiert werden, insbesondere gegen Denaturierung durch Temperaturschwankungen und/oder Scherkräfte, wobei als Stabilisierungsmethode eine oder mehrere Stabilisierungsmethoden aus der Gruppe
- Vakuumtrocknung;
- Gefriertrocknung;
- Lyophilisation;
- Sublimationstrocknung;
- Zugabe von Stabilisatoren, insbesondere von Sacchariden, Sucrosen, Glycerolen, Polyolen, Polyethylenglycolen, Aminosäuren, Methylaminen und/oder anorganischen Salzen;
- Glykosilierung;
- PEGylierung, insbesondere unvollständiges Umhüllen des Bakteriophagen (16) mit Polyethylenglycolmolekülen (70) unter freiem Verbleiben der kontraktilen Scheide (66) des Bakteriophagen (16)
ausgewählt wird.

5. Verfahren nach einem der Ansprüche 2 bis 4,
wobei das Fusionsprotein (122) in Schritt a) mit den folgenden Schritten hergestellt wird:
a1) Klonieren eines Fusionsproteingens;
a2) Transformieren des Fusionsproteingens in einen niederen prokaryotischen oder eukaryotischen Organismus;
a3) Exprimieren von Fusionsproteinen (122) in dem Organismus;
a4) Reinigen der Fusionsproteine (122),
wobei in Schritt a1) ein Bakteriophagenprotein-Gen, ein Linkerprotein-Gen und ein lytisches Protein-Gen ligiert werden.

6. Verfahren nach Anspruch 5,
**dadurch gekennzeichnet, dass** in Schritt a1) die Ligation seriell durchgeführt wird, wobei insbesondere zuerst das Bakteriophagenprotein-Gen, insbesondere N-terminal, und dann das lytische Protein-Gen, insbesondere C-terminal, mit dem Linkerprotein-Gen ligiert wird.

7. Verfahren nach einem der Ansprüche 5 oder 6,
**dadurch gekennzeichnet, dass** für die Ligation unterschiedliche Restriktionsenzyme für das Bakteriophagenprotein-Gen und das lytische Protein-Gen verwendet werden, insbesondere BsmBl als 5'-Ende und Acc65l als 3'-Ende für das Bakteriophagenprotein-Gen und Sall als 5'-Ende und Notl als 3'-Ende für das lytische Protein-Gen.

8. Verfahren nach einem der Ansprüche 5 bis 7,
**dadurch gekennzeichnet, dass** ein Linkerprotein (126) erzeugt wird, das eine freie dreidimensionale Bewegung des Bakteriophagenproteins (124) und des lytischen Proteins (48) zueinander ermöglicht, wobei das Linkerprotein (126) insbesondere eine Länge von neun Codons aufweist und mehr insbesondere frei von Stopcodons ist.

9. Verfahren nach einem der Ansprüche 5 bis 8,
**dadurch gekennzeichnet, dass** das Fusionsprotein (122) stabilisiert wird, insbesondere gegen Denaturierungen, hervorgerufen durch physikalische Einflüsse wie Temperaturschwankungen, Scherkräfte und Drücke, und/oder durch biologische Einflüsse wie Proteasen und/oder durch chemische Einflüsse, wobei als Stabilisierungsmethode eine oder mehrere Stabilisierungsmethoden aus der Gruppe
- Vakuumtrocknung;
- Gefriertrocknung;
- Lyophilisation;
- Sublimationstrocknung;
- Zugabe von Stabilisatoren, insbesondere von Sacchariden, Sucrosen, Glycerolen, Polyolen, Polyethylenglycolen, Aminosäuren, Methylaminen und/oder anorganischen Salzen;
- Glykosilierung;
- PEGylierung
ausgewählt wird.

10. Verfahren nach einem der Ansprüche 1 bis 9,
**dadurch gekennzeichnet, dass** in Schritt a) unterschiedliche Bakteriophagenstämme und/oder eine Mischung aus Bakteriophagen (16) und bakteriolytischen Proteinen (48), insbesondere Fusionsproteinen (122), und/oder Bakteriophagen (16) nicht inhibitierende Antibiotika (112) und/oder Bakteriophagen (16) nicht inhibitierende klassische Desinfektionsmittel (10) bereitgestellt werden.

11. Verfahren nach einem der Ansprüche 1 bis 10,
**dadurch gekennzeichnet, dass** in Schritt b) das Dekontaminationsmittel (20) unter Verwendung wenigstens einer der folgenden Methoden verteilt wird:
- Verneblung mit einer Verneblungsdüse (110);
- Versprühung durch Drucksprühgeräte und/oder Pumpsprühgeräte;
- Ausbringung als trockenes Pulver nach Lyophilisieren;
- Zerstäuben von pulverisierten Bakteriophagen (16);
- Ausbringung nach Binden der Bakteriophagen (16) an Trägermaterialien, insbesondere Pulvermaterialien und/oder feuchte Tücher;
- Ausbringung nach Zugabe von Flüssigkeiten;
- Ausbringung durch Bepinseln;
- Ausbringung nach Auftrag auf Textilien und/oder Einbringung in Tinkturen, Salben, Lotionen, Gele, Spülungen, Pulver, Pflaster, Verbände, Löstabletten, Lutschtabletten, Zäpfchen, Mundwasser und/oder Zahncreme.

12. Verfahren nach einem der Ansprüche 1 bis 11,
**dadurch gekennzeichnet, dass** vor Schritt b) ein Identifikationsschritt zur spezifischen Identifizierung der Kontaminationsspezies in dem Habitat (14) und ein Auswahlschritt zum Auswählen des für die identifizierte Kontaminationsspezies geeigneten Dekontaminationsmittels (20) durchgeführt wird.

13. Verfahren nach einem der Ansprüche 1 bis 12,
**dadurch gekennzeichnet, dass** nach Schritt b) die Bakteriophagen (16) aus dem Habitat (14) entfernt werden, insbesondere unter Verwendung wenigstens eines Filters (114), mehr insbesondere unter Verwendung wenigstens eines HEPA-Filters (116).

14. Verfahren nach einem der Ansprüche 1 bis 13,
**dadurch gekennzeichnet, dass** das Dekontaminationsmittel (20) vor einer Kontamination des Habitats (14) in dem Habitat (14) verteilt wird.

## Claims

1. A non-therapeutic method for the decontamination of bacteriological contamination (12), comprising the steps of
a) preparing a decontaminant (20) based on bacteriolytic proteins (48), wherein bacteriophages (16) are provided;
b) distributing the decontaminant (20) in a habitat (14) to be decontaminated,
**characterized in that**, in step a), the bacteriophages (16) are genetically modified by means of gene knockout through specific mutation in such a way that transduction genes for transferring bacterial virulence factor genes into the bacteriophages (16) are deactivated.

2. The method according to claim 1,
**characterized in that** fusion proteins (122) based on bacteriophage proteins (124) and/or bacteriolytic proteins (48), in particular lysozyme (52), lysostaphin (54), lytM (56), proteases (58) and/or hydrolases (60), are additionally provided in step a).

3. The method according to any one of the claims 1 or 2,
**characterized in that** the gene knockout takes place by means of point mutation, deletion, insertion, inversion and/or frameshift mutation.

4. The method according to any one of the claims 1 to 3,
**characterized in that** the bacteriophages (16) are stabilized, in particular against denaturation caused by temperature fluctuations and/or shear forces, with one or more stabilization methods from the group including
- vacuum drying;
- freeze drying;
- lyophilization;
- sublimation drying;
- addition of stabilizers, in particular of saccharides, sucroses, glycerols, polyols, polyethylene glycols, amino acids, methylamines and/or inorganic salts;
- glycosylation;
- PEGylation, in particular incomplete encapsulation of the bacteriophage (16) with polyethylene glycol molecules (70) while the contractile sheath (66) of the bacteriophage (16) remains free
being selected as the stabilization method.

5. The method according to any one of the claims 2 to 4,
wherein the fusion protein (122) in step a) is prepared with the following steps:
a1) cloning a fusion protein gene;
a2) transforming a fusion protein gene into a lower prokaryotic or eukaryotic organism;
a3) expressing fusion proteins (122) in the organism;
a4) purifying the fusion proteins (122),
wherein a bacteriophage protein gene, a linker protein gene and a lytic protein gene are ligated in step a1).

6. The method according to claim 5,
**characterized in that** in step a1), the ligation is carried out in a serial manner, wherein, in particular, the bacteriophage protein gene is ligated first, in particular N-terminally, and then, in particular C-terminally, the lytic protein gene, with the linker protein gene.

7. The method according to any one of the claims 5 or 6,
**characterized in that** for ligation, different restriction enzymes are used for the bacteriophage protein gene and the lytic protein gene, in particular BsmBl as a 5' end and Acc65l as a 3' end for the bacteriophage protein gene and Sall as a 5' end and Notl as a 3' end for the lytic protein gene.

8. The method according to any one of the claims 5 to 7,
**characterized in that** a linker protein (126) is generated that enables a free three-dimensional movement of the bacteriophage protein (124) and the lytic protein (48) relative to each other, wherein the linker protein (126), in particular, has a length of nine codons and, more particularly, is free from stop codons.

9. The method according to any one of the claims 5 to 8,
**characterized in that** the fusion protein (122) is stabilized, in particular against denaturation caused by physical influences, such as temperature fluctuations, shear forces and pressures, and/or by biological influences, such as proteases, and/or by chemical influences, with one or more stabilization methods from the group including
- vacuum drying;
- freeze drying;
- lyophilization;
- sublimation drying;
- addition of stabilizers, in particular of saccharides, sucroses, glycerols, polyols, polyethylene glycols, amino acids, methylamines and/or inorganic salts;
- glycosylation;
- PEGylierung
being selected as the stabilization method.

10. The method according to any one of the claims 1 to 9,
**characterized in that**, in step a), different bacteriophage strains and/or a mixture of bacteriophages (16) and bacteriolytic proteins (48), in particular fusion proteins (122), and/or antibiotics (112) that do no inhibit bacteriophages (16) and/or conventional disinfectants (10) that do no inhibit bacteriophages (16) are provided.

11. The method according to any one of the claims 1 to 10,
**characterized in that**, in step b), the decontaminant (20) is distributed using at least one of the following methods:
- nebulization with an nebulizing nozzle (110);
- spraying by pressure spraying devices and/or pump spraying devices;
- spreading as dry powder after lyophilization;
- atomization of pulverized bacteriophages (16);
- spreading after bonding the bacteriophage (16) to carrier materials, in particular powder materials and/or moist cloths;
- spreading after adding liquids;
- spreading by painting;
- spreading after application to textiles and/or introduction into tinctures, ointments, lotions, gels, rinses, powders, plasters, dressings, dissolving tablets, lozenges, suppositories, mouthwash and/or toothpaste.

12. The method according to any one of the claims 1 to 11,
**characterized in that** an identification step for specifically identifying the contamination species in the habitat (14) and a selection step for selecting the decontaminant (20) suitable for the identified contamination species are carried out prior to step b).

13. The method according to any one of the claims 1 to 12,
**characterized in that** the bacteriophages (16) are removed from the habitat (14) subsequent to step b), in particular using at least one filter (114), more particularly using at least one HEPA filter (116).

14. The method according to any one of the claims 1 to 13,
**characterized in that** the decontaminant (20) is distributed in the habitat (14) prior to a contamination of the habitat (14).

## Revendications

1. Procédé non thérapeutique de décontamination de polluants bactériologiques (12) comprenant des étapes consistant à :
a) fabriquer un agent de décontamination (20) à base de protéines bactériolytiques (48), des bactériophages (16) étant préparés,
b) répartir l'agent de décontamination (20) dans un habitat (14) à décontaminer,
**caractérisé en ce que**,
dans l'étape a) les bactériophages (16) sont modifiés génétiquement par invalidation génique par mutation spécifique de sorte que des gènes de transduction permettant de transférer des gènes de facteur de virulence bactérienne soient inactivés dans les bactériophages (16).

2. Procédé conforme à la revendication 1,
**caractérisé en ce que**
dans l'étape a) on prépare en outre des protéines de fusion (122) à partir de protéines bactériophages (124) et/ou des protéines bactériolytiques (48), en particulier : lysozyme (52), lysostaphine (54), lytM (56), protéases (58) et/ou hydrolases (60).

3. Procédé conforme à l'une des revendications 1 ou 2,
**caractérisé en ce que**
l'invalidation génique est effectuée par mutation ponctuelle, délétion, insertion, inversion et/ou mutation du code de lecture.

4. Procédé conforme à l'une des revendications 1 à 3,
**caractérisé en ce que**
les bactériophages (16) sont stabilisés, en particulier à l'encontre de dénaturation par des variations de température et/ou des forces de cisaillements, et en tant que méthode de stabilisation, on met en oeuvre au moins l'une des méthodes de stabilisation suivantes :
séchage sous vide,
séchage par congélation,
lyophilisation,
séchage par sublimation,
addition d'agents de stabilisation, en particulier de saccarides, de sucroses, de glycérols, de polyols, de polyéthylène glycols, d'acides aminés, de méthyl amines et/ou de sels inorganiques,
glycolisation,
PEGylation, en particulier enveloppe incomplète des bactériophages (16) par des molécules de polyéthylène glycol (70) en laissant libres les gaines contractiles (66) des bactériophages (16).

5. Procédé conforme à l'une des revendications 2 à 4,
selon lequel la protéine de fusion (122) est fabriquée dans l'étape a) par la mise en oeuvre des étapes suivantes consistant à :
a1) cloner un gène de protéine de fusion,
a2) transformer le gène de protéine de fusion en un organisme procaryote ou eurocaryote inférieur,
a3) exprimer des protéines de fusion (122) dans l'organisme,
a4) purifier la protéine de fusion (122), dans l'étape a1), un gène de protéine bactériophage, un gène de protéine de jonction et un gène de protéine lytique étant ligaturés.

6. Procédé conforme à la revendication 5,
**caractérisé en ce que**
lors de l'étape a1) la ligature est effectuée de manière segmentielle et en particulier le gène de protéine bactériophage est tout d'abord ligaturé avec le gène de protéine de liaison, en particulier par son extrémité N terminale, puis le gène de protéine lytique est ligaturé avec la protéine de jonction en particulier par son extrémité C terminale.

7. Procédé conforme à l'une des revendications 5 et 6,
**caractérisé en ce que**
pour effectuer la ligature on utilise différentes enzymes de restriction pour le gène de protéine bactériophage et le gène de protéine lytique, en particulier BsmBl en tant qu'extrémité 5' et Acc65l en tant qu'extrémité 3' pour le gène de protéine bactériophage et Sall en tant qu'extrémité 5' et Notl en tant qu'extrémité 3' pour le gène de protéine lytique.

8. Procédé conforme à l'une des revendications 5 à 7,
**caractérisé en ce que**
l'on produit une protéine de jonction (126) qui permet un déplacement tridimensionnel libre de la protéine bactériophage (124) et de la protéine lytique (48) l'une par rapport à l'autre, la protéine de jonction (126) ayant en particulier une longueur de neuf codons et plus et étant plus particulièrement exempte de codons Stops.

9. Procédé conforme à l'une des revendications 5 à 8,
**caractérisé en ce que**
la protéine de fusion (122) est stabilisée en particulier à l'encontre de dénaturations provoquées par des influences physiques telles que des variations de température des forces de cisaillement et des pressions et/ou par des influences biologiques telles que des protéases et/ou par des influences chimiques, et en tant que méthode de stabilisation, on choisit au moins une méthode de stabilisation appartenant au groupe formé par :
- le séchage sous vide,
- le séchage par congélation,
- la lyophilisation,
- le séchage par sublimation,
- l'addition d'agents de stabilisation en particulier de saccharides de sucroses, de glycérols, de polyols, de polyéthylène glycols, d'acides aminés, de méthylamides et/ou de sels inorganiques,
- la glycolisation,
- la PEGylation.

10. Procédé conforme à l'une des revendications 1 à 9,
**caractérisé en ce que**
dans l'étape a) on prépare différentes souches de bactériophages et/ou un mélange de bactériophages (16) et de protéines bactériolytiques (48), en particulier de protéines de fusion (122) et/ou d'antibiotiques (112) n'inhibant pas les bactériophages (16), et/ou des agents de désinfection classiques (10) n'inhibant pas les bactériophages (16).

11. Procédé conforme à l'une des revendications 1 à 10,
**caractérisé en ce que**
dans l'étape b) l'agent de décontamination (20) est réparti en utilisant au moins l'une des méthodes suivantes :
- atomisation avec une buse d'atomisation (110),
- pulvérisation avec des appareils de pulvérisation sous pression et/ou des appareils de pulvérisation par pompage,
- épandage sous la forme de poudre sèche après lyophilisation,
- nébulisation de bactériophages (16) pulvérisés,
- épandage après fixation des bactériophages (16) sur des matériaux support en particulier des matériaux pulvérulents et/ou des tissus humides,
- épandage après addition de liquide,
- épandage par badigeonnage,
- épandage après application sur des textiles et/ou introduction dans des teintures, des pommades, des lotions, des gels, des agents de rinçage, des poudres, des plâtres, des pansements, des comprimés solubles, des comprimés à sucer, des bonbons, des bains de bouche et/ou des dentifrices.

12. Procédé conforme à l'une des revendications 1 à 11,
**caractérisé en ce qu'**
avant l'étape b) on met en oeuvre une étape d'identification pour identifier, de manière spécifique, les espèces contaminantes présentes dans l'habitat (14) et une étape de sélection pour sélectionner les agents de décontamination (20) adaptés aux espèces contaminantes identifiées.

13. Procédé conforme à l'une des revendications 1 à 12,
**caractérisé en ce qu'**
après l'étape b) on élimine les bactériophages (16) de l'habitat (14), en particulier en utilisant au moins un filtre (114) et plus particulièrement en utilisant au moins un filtre HEPA (116).

14. Procédé conforme à l'une des revendications 1 à 13,
**caractérisé en ce que**
l'agent de décontamination (20) est réparti dans l'habitat (14) avant une contamination de cet habitat (14).
